# EUROPÄISCHE PATENTSCHRIFT

(11) **EP 4 029 241 B1**
(45) Veröffentlichungstag und Bekanntmachung des Hinweises auf die Patenterteilung: **21.08.2024**
(21) Anmeldenummer: 20785431.6
(22) Anmeldetag: 12.09.2020
(51) Int. Cl.: H04N 13/334, H04N 13/363, H04N 9/31

(54) **VORRICHTUNG ZUR PROJEKTION EINES STEREOBILDES ODER STEREOTEILBILDES**
DEVICE FOR PROJECTING A STEREOSCOPIC IMAGE OR ONE SINGLE IMAGE OF SAID STEREOSCOPIC IMAGE
APPAREIL POUR LA PROJECTION D'UNE IMAGE STEREOSCOPIQUE OU D'UNE IMAGE COMPOSANTE

(30) Priorität: 13.09.2019 DE 102019124743
(43) Veröffentlichungstag der Anmeldung: 20.07.2022
(73) Patentinhaber: Infitec Neue Technologien GmbH, 89547 Gerstetten (DE)
(72) Erfinder: JORKE, Helmut, 89547 Gerstetten (DE); FRITZ, Markus, 89075 Ulm (DE); ROHWER, Klaus, 89081 Ulm (DE)
(74) Vertreter: Straub, Bernd
(86) Internationale Anmeldenummer: PCT/DE2020/100797
(87) Internationale Veröffentlichungsnummer: WO 2021/047740

(56) Entgegenhaltungen:
- WO-A1-2017/132944
- US-A1- 2013 181 973

## Beschreibung

### TECHNISCHES GEBIET

Die Erfindung betrifft eine Vorrichtung zur Projektion eines Stereobildes oder Stereoteilbildes.

### STAND DER TECHNIK

Es existieren verschiedene Techniken zur dreidimensionalen Wiedergabe von Bildern und Videodaten sowie CAD-Daten. Aus der DE 198 08 264 C2 ist ein Stereosystem nach der Wellenlängenmultiplex-Technologie bekannt. Dabei werden von einem Objekt zwei Stereohalbbilder, auch Perspektivteilbilder, erzeugt, die das Objekt unter unterschiedlichen Bildwinkeln darstellen. Der Bildwinkelunterschied entspricht dabei bevorzugt der Augenparallaxe des menschlichen Betrachters.

Zur Erzeugung eines räumlichen Eindrucks des Objekts wirken ein Stereoprojektor und eine Stereobrille derart zusammen, dass ein Betrachter, der die projizierten Stereobilder durch die Brillengläser der Betrachtungsvorrichtung hindurch betrachtet, das dem rechten Auge zugeordnete Stereohalbbild nur mit dem rechten Auge und das dem linken Auge zugeordnete Stereohalbbild nur mit dem linken Auge sieht.

Bei dem hier beschriebenen Wellenlängenmultiplex-Stereosystem werden die beiden Stereohalbbilder mit zueinander orthogonalen Emissions- oder Projektionsspektren auf einen Projektionsschirm, beispielsweise eine Kinoleinwand projiziert. Unter orthogonalen Emissions- oder Projektionsspektren werden im Rahmen der vorliegenden Beschreibung allgemein Emissions- oder Projektionsspektren verstanden, deren Spektralbänder einander im sichtbaren Bereich im Wesentlichen nicht überlappen.

Beim Wellenlängenmultiplexing werden mehrere voneinander beabstandete Spektralbänder zur Projektion verwendet, die sich bezüglich der Lage an der spektralen Empfindlichkeit der drei Farbrezeptoren des menschlichen Auges orientieren. Dabei unterscheiden sich die Bänder des Emissions- oder Projektionsspektrums für das rechte Stereohalbbild von den Bändern des Emissions- oder Projektionsspektrums für das linke Stereohalbbild derart, dass die oben erläuterte Bedingung der Orthogonalität der Emissions- oder Projektionsspektren erfüllt ist. Die erzeugten Stereohalbbilder werden auf dem Projektionsschirm deckend aufeinander projiziert. Dabei ist es möglich, die unterschiedlichen Emissions- oder Projektionsspektren durch den Einsatz von jeweils drei sehr schmalbandigen Lichtquellen insbesondere mittels Lasern zu realisieren, deren Emissions- oder Projektionsspektren im roten, grünen beziehungsweise blauen Spektralbereich liegen und paarweise zueinander versetzt sind. Alternativ ist beschrieben, die Emissions- oder Projektionsspektren mittels schmalbandiger Interferenzfilter aus einer breitbandigen Weißlichtquelle zu generieren.

Die Stereobrille zeigt dabei Brillengläser, die als Interferenzfilter entsprechend den Projektorinterferenzfiltern ausgebildet sind. Diese Interferenzfilter zur Erzeugung des linken Stereohalbbildes im Projektor und zur Selektion im linken Brillenglas sind identisch ausgebildet, so dass mit Hilfe des linken Brillenglases das durch den entsprechenden Interferenzfilter im Projektor erzeugte linke Stereohalbbild durchgelassen wird, während das rechte Stereohalbbild mittels eines orthogonalen Interferenzfilters für das rechte Stereohalbbild gesperrt wird. In entsprechender Weise erfolgt dies umgekehrt mit dem rechten Brillenglas der Stereobrille, das den gleichen Interferenzfilter mit der gleichen Spektralstruktur wie der Interferenzfilter im Projektor für das rechte Stereohalbbild aufweist. Durch diese Ausbildung der Stereobrille, die auf den Stereoprojektor mit seinen Emissions- oder Projektionsspektren abgestimmt ist, ist wird eine verlässliche Kanaltrennung geschaffen.

Die Interferenzfilter, wie sie in der DE 198 08 264 C2 verwendet werden, stellen optische Filter dar, bei denen auf einem aus Klarglas gebildeten Träger mehrere Reflexionsschichten aus Metalloxiden und dünne dielektrische farblose Schichten aufgebracht sind. Dabei zeigen die aufgebrachten Schichten wechselweise unterschiedliche Brechungsindices. An jeder Grenzfläche zwischen zwei Materialien wird die auftreffende elektromagnetische Strahlung in einen Teil aufgespalten, der reflektiert wird und in einen anderen Teil, der durchgelassen wird. An den vielen Grenzschichten entstehen sehr viele Teilstrahlen, die sich wechselseitig überlagern und auslöschen also interferieren können, so dass bei geeigneter Materialwahl und Dickenwahl der Schichten die Filtereigenschaften spezifisch gewählt werden können. Gerade wenn sehr kantensteile Filtercharakteristiken und starke Blockungen gewünscht sind, werden viele spezifische Interferenzschichten benötigt, die die Interferenzfilter sehr aufwendig machen. Da Interferenzfilter sehr flankensteile Durchlassbereiche und gute Blockungen ermöglichen, sind sie für die Wellenlängenmultiplex-Stereotechnologie besonders geeignet.

Aus der DE 198 08 264 C2 und der US 2013/0181973 A1 ist ein Laserprojektor mit sechs einzelnen Laserlichtquellen, die zwei rote Laserlichtquellen, zwei grüne Laserlichtquellen und zwei blaue Laserlichtquellen enthalten, für die Stereobildprojektion nach dem Wellenlängenmultiplex-Prinzip bekannt.

Weiterhin sind Laserprojektoren aus der EP 2 741 139 A1 und der EP 2 875 284 A1 sowie aus der WO 2017/132944 A1 bekannt, die für die gewöhnliche Videoprojektion, jedoch nicht für die Stereobildprojektion geeignet sind und ohne aktive Laserlichtquellen für jede einzelne Grundfarbe auskommen. Hierbei wird beispielsweise das von einem blauen Laser emittierte Licht auf ein Farbrad mit einem grünen Photolumineszenzkörper geleitet, wo das blaue Laserlicht mittels Fluoreszenz in grünes emittiertes Licht gewandelt wird. Entsprechendes gilt für einen roten Photolumineszenzkörper, der blaues Laserlicht mittels Fluoreszenz in rotes emittiertes Licht wandelt. Dieses grüne Licht und rote Licht wird mit dem blauen Laserlicht zur Projektion von Videodaten verwendet. Ein zusätzlicher grüner Laser oder roter Laser ist dadurch entbehrlich. Als Variante der Photolumineszenzkörper haben sich sowohl Fluoreszenzkörper als auch Phosphoreszenzkörper bewährt.

Weiterhin ist aus den beiden US-Patentanmeldungen US 2013/0314670 A1 und US 2014/0119003 A1 eine Lichtquelle für einen Stereoprojektor bekannt, bei der mittels blauer LED-Lichtquellen blaues Licht auf ein Farbrad projiziert wird. In dem Farbrad wird das einfallende blaue Licht mittels geeignetem Phosphormaterial entweder in rotes oder grünes Licht gewandelt und mit dem blauen Licht getrennt voneinander einem abgesetzten Multiband Farbfilter zugeführt, der nach dem Wellenlängenmultiplexsystem arbeitet. Das Farbrad ist dabei so ausgebildet, das es neben der Funktion des Farbumsetzens zusätzlich einen Farbfilter darstellt, der bestimmte Frequenzen transmittiert und andere Frequenzen reflektiert. Der Aufbau dieser Lichtquellen erweist sich als sehr komplex und sehr störungsanfällig. Auch zeigen sie durch die vielen Komponenten eine geringe Effizienz.

### BESCHREIBUNG DER ERFINDUNG

Der Erfindung liegt die Aufgabe zu Grunde, eine gegenüber dem Stand der Technik verbesserte Vorrichtung zur Projektion eines Stereobildes oder Stereoteilbildes nach dem Wellenlängenmultiplex-Prinzip anzugeben.

Die Aufgabe wird erfindungsgemäß mit einer Vorrichtung gelöst, welche die im Anspruch 1 angegebenen Merkmale aufweist.

Vorteilhafte Ausgestaltungen der Erfindung sind Gegenstand der Unteransprüche.

Die erfindungsgemäße Vorrichtung zur Projektion eines Stereobildes oder Stereoteilbildes für ein Wellenlängenmultiplex-Stereosystem weist wenigstens eine Projektionseinheit mit einer blauen Laserlichtquelle auf. Die Projektionseinheit weist dabei wenigstens einen Photolumineszenzkörper auf, der der blauen Laserlichtquelle zugeordnet ist und so ausgebildet und angeordnet ist, dass der Photolumineszenzkörper von der blauen Laserlichtquelle mit schmalbandigem blauem Licht so bestrahlt wird, dass er breitbandiges Licht ausstrahlt. Weiterhin weist die Projektionseinheit wenigstens eine Filteranordnung auf, die so ausgebildet und angeordnet ist, dass das ausgestrahlte breitbandige Licht in wenigstens ein schmalbandiges rotes Teilspektrum und ein schmalbandiges grünes Teilspektrum gefiltert wird.

Die Durchlassbereiche der Teilspektren zeigen als schmalbandige Teilspektren eine mittlere Bandbreite von unter 25nm und stellen damit sicher, dass sich die Durchlassbereiche nicht oder nicht relevant überlappen.

Das von einem Photolumineszenzkörper ausgestrahlte breitbandige Licht ist so breitbandig, dass wesentliche Teile des sichtbaren roten und grünen Farbspektrums des sichtbaren Lichtes umfasst sind. Das breitbandige Licht umfasst dabei wenigstens eine mittlere Bandbreite von 150nm.

Diese Projektionseinheit ermöglicht die Projektion eines Stereoteilbildes für ein Wellenlängenmultiplex-Stereosystem, indem die Bildinformationen eines Stereoteilbildes, auch Stereohalbbild genannt, auf die erzeugten drei schmalbandigen Spektralbereiche - einmal das schmalbandige blaue Laserlicht, das schmalbandige rote Teilspektrum und das schmalbandige grüne Teilspektrum - aufmoduliert werden. Dieser Aufbau der Projektionseinheit ermöglicht einen kompakten und wenig aufwendigen Aufbau einer erfindungsgemäßen Vorrichtung zur Projektion eines Stereobildes oder Stereoteilbildes für ein Wellenlängenmultiplex-Stereosystem. Gerade durch die erfindungsgemäß geringe Anzahl an aktiven Laserlichtquellen gelingt es, eine robuste und wenig anfällige Vorrichtung zur Projektion eines Stereobildes oder Stereoteilbildes für ein Wellenlängenmultiplex-Stereosystem zu schaffen.

Dabei wird die Vorrichtung zur Projektion eines Stereobildes oder Stereoteilbildes für ein Wellenlängenmultiplex-Stereosystem so ausgebildet, dass wenigstens ein Teilspektrum durch zwei schmalbandige, gering beabstandete und benachbarte Subspektren derselben Grundfarbe gebildet ist. Hierdurch wird die Anzahl der Durchlassbereiche für die Stereoteilbilder von drei Durchlassbereichen erhöht, insbesondere auf vier oder fünf Durchlassbereiche. Aus einem schmalbandigen roten oder grünen Teilspektrum werden somit zwei rote oder grüne Subspektren, die vorzugsweise besonders schmalbandig ausgebildet sind. Beispielsweise werden dadurch für das linke Stereoteilbild ein Durchlassbereich für jede Grundfarbe, also insgesamt drei Durchlassbereiche, und für das rechte Stereoteilbild insgesamt vier oder fünf Durchlassbereiche realisiert. Dadurch gelingt es, eine effiziente Lichtausbeute mit besonders guter Farbwiedergabe zu erreichen, ohne den kompakten und robusten Aufbau der Vorrichtung negativ zu beeinflussen.

Für die Photolumineszenzkörper haben sich dabei unterschiedliche fluoreszierende oder auch phosphoreszierende Substanzen bewährt, die im Stand der Technik bekannt sind und nach Bedarf für den Einsatz in einem Projektor ausgewählt werden. Dabei sind als Varianten für die Photolumineszenzkörper fluoreszierende Substanzen oder auch phosphoreszierende Substanzen bekannt und haben sich bewährt. Je nach Bedarf werden unterschiedliche fluoreszierende oder auch phosphoreszierende Substanzen gewählt, zum Beispiel abhängig davon, durch welche Frequenzbereiche insbesondere schmalbandige Frequenzbereiche der Photolumineszenzkörper angeregt werden soll und welches Licht, insbesondere ob breitbandiges Licht ausgestrahlt werden soll.

Dabei kann die erfindungsgemäße Vorrichtung neben der erfindungsgemäßen Projektionseinheit auch eine oder mehrere weitere Projektionseinheiten aufweisen, wobei diese einen entsprechenden Aufbau oder auch einen anderen Aufbau nach dem Stand der Technik zeigen können. Beispielsweise kann eine solche weitere Projektionseinheit nach dem Stand der Technik drei aktive, schmalbandige Laserlichtquellen im roten, blauen und grünen Bereich des Lichtes zeigen, wobei diese Lichtbereiche regelmäßig orthogonal zueinander gewählt sind, so dass die Spektren der projizierten Stereoteilbilder keinen relevanten spektralen Überlapp und damit keine relevante wechselseitige Beeinflussung zeigen. Die erfindungsgemäßen Vorteile der Vorrichtung zur Projektion eines Stereobildes oder Stereoteilbildes für ein Wellenlängenmultiplex-Stereosystem treten bereits bei der Verwendung einer einzigen erfindungsgemäßen Projektionseinheit auf und werden bei mehrfacher Realisierung einer erfindungsgemäßen Projektionseinheit entsprechend vergrößert.

Nach einer besonders bevorzugten Ausführung der erfindungsgemäßen Vorrichtung zur Projektion eines Stereobildes oder Stereoteilbildes für ein Wellenlängenmultiplex-Stereosystem sind zwei benachbarte Subspektren unterschiedlicher Teilspektren miteinander zu einem gemeinsamen Subspektrum verbunden. Durch dieses gemeinsame Subspektrum kann die Lichteffizienz gesteigert werden, so dass die Lichtstärke der Vorrichtung verbessert werden kann und zudem die Farbwiedergabe ausgeglichener gestaltet werden kann, ohne dass der kompakte und robuste Aufbau der Vorrichtung negativ beeinflusst wird.

Eine bevorzugte Weiterbildung der erfindungsgemäßen Vorrichtung zur Projektion eines Stereobildes oder Stereoteilbildes für ein Wellenlängenmultiplex-Stereosystem zeigt Durchlassbereiche der schmalbandigen Teilspektren, die als Subspektren ausgebildet sind, von denen zwei benachbarte Subspektren verschiedener Teilspektren zu einem gemeinsamen breiten Subspektrum, welches somit zwei Grundfarben umfasst, verbunden sind. Diese orthogonalen Teilspektren und Subspektren zeigen bevorzugt jeweils eine zentrale Wellenlänge im Bereich von 525nm, 545nm, 580nm, 610nm, 635nm, wobei das Teilspektrum und das Subspektrum mit der zentralen Wellenlänge im Bereich von 525nm und von 545nm im grünen Farbbereich des Lichts und das Teilspektrum und das Subspektrum mit der zentralen Wellenlänge im Bereich von 610nm und von 635nm im roten Farbbereich des Lichts liegen und das gemeinsame breite Subspektrum im Bereich von 580nm im roten und grünen Farbbereich, der aufgrund des Übergangs als gelb wahrgenommen wird (Farbmetamerie). Vorzugsweise zeigen die Durchlassbereiche der Teilspektren beziehungsweise der einzelnen Subspektren bis auf den Durchlassbereich des gemeinsamen breiten Subspektrum eine mittlere Bandbreite von unter 20 nm und das gemeinsame Subspektrum eine mittlere Bandbreite von etwa 30 nm. Dabei sind die Durchlassbereiche mit den zentralen Wellenlängen im Bereich von 525nm und 610nm dem einen Stereoteilbild und die Durchlassbereiche mit den zentralen Wellenlängen im Bereich von 545nm, 580nm und 635nm dem anderen Stereoteilbild zugeordnet.

Eine andere besonders bevorzugte Ausführung zeigt orthogonale Teilspektren und Subspektren, die eine zentrale Wellenlänge im Bereich von 508nm, 549nm, 580nm, 609nm und größer als 640nm insbesondere 655nm oder 664nm zeigen, wobei die Durchlassbereiche mit der zentralen Wellenlänge im Bereich von 508nm und von 549nm im grünen Farbbereich des Lichts und die Durchlassbereiche mit der zentralen Wellenlänge im Bereich von 609nm und oberhalb von 640nm im roten Farbbereich des Lichts liegen und das gemeinsame breite Subspektrum im Bereich von 580nm im roten und grünen Farbbereich, der aufgrund des Übergangs als gelb wahrgenommen wird (Farbmetamerie).

Vorzugsweise zeigen diese Durchlassbereiche eine mittlere Bandbreite von unter 20nm, wobei in diesem bevorzugten Beispiel die Durchlassbereiche mit der niedrigsten und der höchsten Wellenlänge zur Verbesserung der Farbhomogenität eine deutlich größere mittlere Bandbreite zeigen. Der Durchlassbereich mit 508nm zeigt dabei bevorzugt eine mittlere Bandbreite von 40nm und Der Durchlassbereich mit einer zentralen Wellenlänge von oberhalb von 640nm, von 655nm und von 664nm zeigt eine mittlere Bandbreite etwa von 30nm, von 45nm oder von 71nm. Dabei sind die Durchlassbereiche mit den zentralen Wellenlängen im Bereich von 549nm und 609nm dem einen Stereoteilbild und die Durchlassbereiche mit den zentralen Wellenlängen im Bereich von 508nm, 580nm und oberhalb von 640nm dem anderen Stereoteilbild zugeordnet.

Dabei können die beiden langwelligsten Durchlassbereiche im roten Farbbereich des Lichts abhängig von der Struktur beziehungsweise der verwendeten Materialien der Photolumineszenzkörper dem einen oder dem anderen Stereoteilbild zugeordnet sein, so dass die Zuordnung dieser langwelligsten Durchlassbereiche zu dem jeweiligen Stereoteilbild im Austausch zueinander in Hinblick auf ein möglichst gutes Fahrempfinden gewählt wird.

Diese beispielhaften Auswahlen der Durchlassbereiche der vorstehenden Ausführungsbeispiele ermöglichen eine sehr lichteffiziente Gestaltung der Vorrichtung zur Projektion eines Stereobildes oder Stereoteilbildes für ein Wellenlängenmultiplex-Stereosystem bei ausgeglichener Farbwiedergabe, ohne dass der kompakte und robuste Aufbau der Vorrichtung negativ beeinflusst ist.

Daneben hat es sich als besonders vorteilhaft erwiesen, die Vorrichtung zur Projektion eines Stereobildes oder Stereoteilbildes für ein Wellenlängenmultiplex-Stereosystem mit wenigstens einer Laserlichtquelle zu versehen, die schmalbandiges blaues Laserlicht mit einer Wellenlänge von 445nm und/oder 465nm und insbesondere einer mittleren Bandbreite von unter 10nm aussendet. Gerade durch diese erfindungsgemäße Auswahl und die geringe Anzahl an aktiven Laserlichtquellen gelingt es, eine robuste und wenig anfällige Vorrichtung zur Projektion eines Stereobildes oder Stereoteilbildes für ein Wellenlängenmultiplex-Stereosystem zu schaffen, die zudem besonders kompakt ausgebildet ist.

Dabei hat es sich besonders bewährt, die erfindungsgemäße Vorrichtung zur Projektion eines Stereobildes oder Stereoteilbildes für ein Wellenlängenmultiplex-Stereosystem so weiterzubilden, dass sie eine zweite Projektionseinheit aufweist. Diese zeigt einen zweiten Photolumineszenzkörper, der einer zweiten blauen Laserlichtquelle zugeordnet ist und so ausgebildet und angeordnet ist, dass der zweite Photolumineszenzkörper von der zweiten blauen Laserlichtquelle mit blauem Licht so bestrahlt wird, dass er breitbandiges Licht ausstrahlt. Dabei können die Photolumineszenzkörper dieselben Substanzen für die Photolumineszenz zeigen oder nach Bedarf gerade bei in der Frequenz deutlich unterschiedlichen blauen Laserlichtquellen auch unterschiedliche Substanzen für die Photolumineszenz zeigen. Die Projektionseinheit ist dabei mit einer zweiten Filteranordnung versehen, die so ausgebildet und angeordnet ist, dass das ausgestrahlte breitbandige Licht in wenigstens ein zweites schmalbandiges rotes Teilspektrum gefiltert und ein zweites schmalbandiges grünes Teilspektrum gefiltert wird. Dabei sind die Teilspektren und die blauen Lichter der Laserlichtquellen so wechselseitig orthogonal zueinander ausgebildet, dass die Spektren der projizierten Stereoteilbilder keinen relevanten spektralen Überlapp und damit keine relevante wechselseitige Beeinflussung zeigen. Diese Vorrichtung zur Projektion eines Stereobildes oder Stereoteilbildes für ein Wellenlängenmultiplex-Stereosystem erweist sich als besonders effizient in der Projektion. Sie ist dabei in ihrem Aufbau kompakt und im Betrieb wenig anfällig, da sie die Anzahl der anfälligen aktiven Komponenten gering hält.

Darüber hinaus hat es sich besonders bewährt, die Vorrichtung zur Projektion eines Stereobildes oder Stereoteilbildes für ein Wellenlängenmultiplex-Stereosystem mit wenigstens zwei Projektionseinheiten in einem einzigen gemeinsamen Gehäuse zu integrieren. Dadurch wird die Handhabung dieser besonders kompakten und wenig anfälligen Vorrichtung wesentlich vereinfacht.

Eine Vorrichtung zur Projektion eines Stereobildes oder Stereoteilbildes für ein Wellenlängenmultiplex-Stereosystem mit einer oder mehreren Filteranordnungen, die einen einzigen optischen Filter mit mehreren Durchlassbereichen entsprechend mehreren Teilspektren und/oder entsprechend den blauen Lichtern aufweist, hat sich besonders bewährt. Durch die Reduktion der einzelnen optischen Komponenten, indem ein einziger optischer Filter mehrere spezifische, schmale Durchlassbereiche aufweist, die sonst von mehreren einzelnen optischen Filtern realisiert werden, gelingt es, einen kompakteren Aufbau der erfindungsgemäßen Vorrichtung zur Projektion eines Stereobildes oder Stereoteilbildes für ein Wellenlängenmultiplex-Stereosystem zu realisieren. Dabei müssen nicht alle Teilspektren in einem einzigen solchen optischen Filter realisiert sein. Entsprechendes gilt auch für das blaue Licht der Laserlichtquellen.

Als besonders bevorzugte erfindungsgemäße Vorrichtung hat sich eine Vorrichtung gezeigt, die eine oder mehrere Filteranordnungen mit mehreren optischen Filtern mit jeweils einem Durchlassbereich entsprechend den mehreren Teilspektren und/oder entsprechend den blauen Lichtern aufweist. Diese Vorrichtung erweist sich als besonders wartungsfreundlich, da bei einem Defekt eines Filters nur ein einfacher optischer Filter ausgetauscht werden muss. Auch ist eine Anpassung an andere insbesondere verschobene Durchlassbereiche oder Lichtquellen durch Ersetzen eines einzelnen betroffenen optischen Filters in besonders wartungsfreundlicher Weise möglich.

Daneben hat es sich auch bewährt, dass die Vorrichtung zur Projektion eines Stereobildes oder Stereoteilbildes für ein Wellenlängenmultiplex-Stereosystem mehrere Projektionseinheiten mit einem einzigen gemeinsamen Photolumineszenzkörper aufweist. Dabei ist der gemeinsame Photolumineszenzkörper mehreren blauen Laserlichtquellen zugeordnet und so ausgebildet und angeordnet, dass der gemeinsame Photolumineszenzkörper von den mehreren blauen Laserlichtquellen mit schmalbandigem blauem Licht so bestrahlt wird, dass er breitbandiges Licht ausstrahlt. Zusätzlich weisen die Projektionseinheiten Filteranordnungen auf, die so ausgebildet und angeordnet sind, dass durch sie das ausgestrahlte breitbandige Licht in wenigstens zwei schmalbandige rote Teilspektren gefiltert und in wenigstens zwei schmalbandige grüne Teilspektren gefiltert werden. Dabei sind die roten und grünen Teilspektren und die blauen Laserlichter der Laserlichtquellen so gewählt, dass die damit projizierten Stereoteilbilder wechselseitig orthogonal zueinander ausgebildet sind. Durch diese orthogonale Ausbildung der für die Stereoteilbilder verwendeten Bandspektren ist sichergestellt, dass eine sichere Trennung und damit eine wechselseitiges Übersprechen des einen Stereoteilbildes auf das andere Stereoteilbildes und damit negative Beeinflussung des einen Stereoteilbildes auf das andere Stereoteilbildes ausgeschlossen sind. Dieser einfache Aufbau der Vorrichtung zur Projektion eines Stereobildes oder Stereoteilbildes für ein Wellenlängenmultiplex-Stereosystem hat sich besonders bewährt, zumal er sich als besonders robust und kompakt erweist.

Eine besonders bevorzugte Ausbildung der Erfindung zeigt eine Vorrichtung zur Projektion eines Stereobildes oder Stereoteilbildes für ein Wellenlängenmultiplex-Stereosystem, bei dem die orthogonalen Durchlassbereiche der schmalbandigen Teilspektren eine zentrale Wellenlänge im Bereich von 525nm, 545nm, 610nm, 635nm aufweisen und eine Bandbreite, die sicherstellt, dass sich die Durchlassbereiche nicht oder nicht relevant überlappen. Vorzugsweise zeigen sie eine mittlere Bandbreite von unter 25 nm, wobei die mittlere Bandbreite für die grünen Durchlassbereiche vorzugsweise bei oder unter 20nm und für die roten Durchlassbereiche vorzugsweise bei oder unter 25nm gewählt ist. Neben der Möglichkeit, für die blauen Durchlassbereiche eine mittlere Bandbreite vorzugsweise bei oder unter 10nm zu wählen, hat es sich auch im Besonderen bewährt, den Filter für das blaue Licht so wählen, dass er bei schmalbandigem blauen Laserlicht der zugeordneten Laserlichtquelle einen breiten Durchlassbereich aufweist, der gegebenenfalls den Charakter eines Notchfilters zeigt, welcher das blaue Laserlicht des oder der anderen Laserlichtquellen unterdrückt und das schmalbandige blaue Laserlicht der eigenen, zugeordneten Laserlichtquelle möglichst ungehindert hindurchtreten lässt. Dadurch ist neben einer sicheren Trennung der Bildinformationen der Stereoteilbilder eine gute Farbwiedergabe sowie mit zunehmender Breite des blauen Durchlassbereiches eine geringere störende Spiegelung an dem blauen Filter und damit eine gute Effizient der Vorrichtung gewährleistet. Dabei zeigt die Vorrichtung einen besonders robusten und kompakten Aufbau.

Weiterhin hat es sich alternativ oder zusätzlich bewährt, bei der Vorrichtung zur Projektion eines Stereobildes oder Stereoteilbildes für ein Wellenlängenmultiplex-Stereosystem optische Filter der Filteranordnungen auf einem Filterrad sequenziell hintereinander anzuordnen. Dabei sind bevorzugt zumindest ein Teil der optischen Filter der Filteranordnungen einen Ring bildend oder segmentweise eine kreisrunde Scheibe bildend auf dem Filterrad angeordnet. Dadurch ist es möglich, den Lichtstrahl, der auf das Filterrad in den Bereich der darauf angeordneten optischen Filter fällt, so mit dem rotierenden Filterrad zu synchronisieren, dass jeweils diejenigen optischen Filter des Filterrades durchstrahlt werden, die die passende Spektralverteilung und/oder die passende Bildinformation und damit die passende Zugehörigkeit zu einem bestimmten Stereoteilbild besitzen. Diese Synchronisation wird durch eine Steuerung der Vorrichtung sichergestellt. Das Vorsehen eines derartigen Filterrades ermöglicht einen besonders kompakten Aufbau einer derartigen Vorrichtung, der die Realisierung einer Ein-Projektorlösung mit einem einzigen Gehäuse ermöglicht.

Auch hat es sich bewährt, die Vorrichtung zur Projektion eines Stereobildes oder Stereoteilbildes für ein Wellenlängenmultiplex-Stereosystem so weiterzubilden, dass im Strahlengang nach einem oder mehreren insbesondere nach dem gemeinsamen Photolumineszenzkörper eine bildgebende Einheit angeordnet ist. Dadurch ist es möglich, die nachfolgenden optischen Komponenten kompakter auszubilden und/oder gegebenenfalls in ihrer Anzahl zu reduzieren. Diese Vorrichtung ermöglicht einen besonders kompakten und wenig anfälligen Aufbau.

Neben der Möglichkeit, eine oder mehrere bildgebende Einheiten vor der zugeordneten Filteranordnung im Strahlengang anzuordnen, hat es sich besonders bewährt, eine oder mehrere insbesondere alle bildgebenden Einheiten nach der zugeordneten Filteranordnung im Strahlengang anzuordnen. Dadurch gelingt es, die Vorrichtung besonders kompakt und dabei zusätzlich besonders robust zu gestalten, denn die Belastung der bildgebenden Einheiten kann durch die Reduktion des zu modulierenden Lichts reduziert und dadurch die Haltbarkeit verbessert werden. Auch können diese bildgebenden Einheiten weniger aufwendig und dadurch kompakter gestaltet werden.

Nach einer bevorzugten Weiterbildung der Erfindung wird bei der Vorrichtung zur Projektion eines Stereobildes oder Stereoteilbildes für ein Wellenlängenmultiplex-Stereosystem im Strahlengang nach der oder den Laserlichtquellen und nach dem zugeordneten Photolumineszenzkörper eine bildgebende Einheit angeordnet. Insbesondere wird die bildgebende Einheit nach einem Strahlvereiniger und nach einem bevorzugten gemeinsamen Photolumineszenzkörper und insbesondere vor der zugeordneten Filteranordnung angeordnet, wodurch die Anzahl der bildgebenden Einheiten reduziert insbesondere minimiert werden kann. Dies ermöglicht eine ausgesprochen kompakte Vorrichtung, die sich als besonders robust erweist und somit einfach zu warten ist.

Nach einer bevorzugten Weiterbildung der Erfindung sind bei der Vorrichtung zur Projektion eines Stereobildes oder Stereoteilbildes für ein Wellenlängenmultiplex-Stereosystem mehrere Photolumineszenzkörper auf einem Photolumineszenzrad sequenziell hintereinander angeordnet und im Strahlengang vor den Filteranordnungen, die den Photolumineszenzkörpern des Photolumineszenzrades zugeordnet sind. Insbesondere ist dabei bevorzugt wenigstens eine bildgebende Einheit nach dem Photolumineszenzrad und/oder den Filteranordnungen, die gegebenenfalls ein Filterrad bilden, angeordnet. Dabei sind bevorzugt die Photolumineszenzkörper allein oder mit einem oder mehreren transparenten Bereichen einen Ring bildend oder segmentweise eine kreisrunde Scheibe bildend auf dem Photolumineszenzrad angeordnet. Durch die Anordnung der Photolumineszenzkörper gegebenenfalls mit dem oder den transparenten Bereichen auf dem rotierenden Photolumineszenzrad ist es möglich, den Lichtstrahl, der auf das Photolumineszenzrad fällt, so mit dem rotierenden Photolumineszenzrad zu synchronisieren, dass jeweils die Photolumineszenzkörper des Photolumineszenzrades beziehungsweise der transparente Bereich bestrahlt werden, die die passenden Photolumineszenzeigenschaften entsprechend den passenden Filtereigenschaften beziehungsweise den passenden Bildinformationen und damit entsprechend der passenden Zugehörigkeit zu einem bestimmten Stereoteilbild besitzen.

Dabei ermöglicht das rotierende Photolumineszenzrad, das entweder im Reflexionsbetrieb und im Durchlichtbetrieb verwendet wird, eine Beschränkung des Wärmeeintrages auf den oder die Photolumineszenzkörper, da sich der räumlich begrenzte bestrahlte Bereich des Photolumineszenzkörpers durch die Rotation des Photolumineszenzrades in den Strahlengang und aus diesem herausbewegt und damit nur kurze Zeit in dem Strahlengang befindet und damit der Wärmeeintrag durch das Laserlicht begrenzt wird. Dies erhöht die Robustheit der Vorrichtung erheblich. Ist sowohl ein Filterrad wie auch ein Photolumineszenzrad vorgesehen, sind diese regelmäßig in ihrer Rotation aufeinander abgestimmt. Insbesondere ist es möglich, dass das Filterrad und das Photolumineszenzrad im Gleichtakt miteinander rotieren und insbesondere drehfest miteinander verbunden sind. Diese Synchronisation des Photolumineszenzrades wird durch eine Steuerung der Vorrichtung sichergestellt. Das Vorsehen eines derartigen Photolumineszenzrades ermöglicht einen besonders kompakten Aufbau einer derartigen Vorrichtung, der die Realisierung einer Ein-Projektorlösung mit einem einzigen Gehäuse ermöglicht.

Es hat sich besonders bewährt, die Vorrichtung zur Projektion eines Stereobildes oder Stereoteilbildes für ein Wellenlängenmultiplex-Stereosystem so weiterzubilden, dass zwischen Photolumineszenzkörper und zugeordneter Filteranordnung ein Strahlteiler insbesondere ein dichroitischer Strahlteiler angeordnet ist. Dabei hat es sich besonders bewährt, den Strahlteiler nach einem bevorzugt gemeinsamen Photolumineszenzkörper im Strahlengang anzuordnen. Neben der Möglichkeit eines kompakten Aufbaus ist dadurch eine besonders robuste Vorrichtung geschaffen.

Darüber hinaus hat es sich als besonders vorteilhaft erwiesen, den Strahlteiler insbesondere den dichroitischen Strahlteiler der Vorrichtung zur Projektion eines Stereobildes oder Stereoteilbildes für ein Wellenlängenmultiplex-Stereosystem so auszubilden, dass er eine oder alle Filteranordnungen enthält, wobei die Filteranordnungen den unterschiedlich aufgeteilten Strahlungswegen zugeordnet sind. Diese Vorrichtung zeigt eine besondere Lichteffizienz und einen kompakten wie auch wenig anfälligen Aufbau.

Eine andere Weiterbildung der Vorrichtung zur Projektion eines Stereobildes oder Stereoteilbildes für ein Wellenlängenmultiplex-Stereosystem zeigt wenigstens eine Projektionseinheit mit wenigstens einer roten Laserlichtquelle, die schmalbandiges rotes Laserlicht erzeugt, welches in den Strahlengang vor der bildgebenden Einheit eingekoppelt ist. Das rote Laserlicht stellt dabei sicher, dass ausreichend rotes Licht für die Projektion des Stereoteilbildes zur Verfügung steht und damit ein ausgewogenes, gleichmäßiges, weißes Farbempfinden erreicht werden kann. Bei dem Vorsehen mehrerer Projektionseinheiten werden die roten Laserlichtquellen so gewählt, dass ihre Frequenzbereiche orthogonal zueinander stehen. Wird das rote Laserlicht im Strahlengang vor der zugeordneten Filteranordnung eingekoppelt, so wird die Laserlichtquelle beziehungsweise die zugeordnete Filteranordnung so gewählt, dass das rote Laserlicht der Laserlichtquelle mit der zugeordneten Filteranordnung so zusammenwirkt, dass das zugeordnete Laserlicht nicht herausgefiltert wird.

Darüber hinaus hat es sich als besonders vorteilhaft erwiesen, die erfindungsgemäße Vorrichtung so weiterzubilden, dass sie ein Wellenlängenmultiplex-Stereosystem mit wenigstens einer Vorrichtung zur Projektion eines Stereobildes und mit wenigstens einer Stereobrille, die geeignet ist, die beiden Stereoteilbilder sicher voneinander zu trennen und den unterschiedlichen Augen eines Benutzers selektiv zuzuführen, bildet. Dies wird dadurch erreicht, dass mit einem Brillenfilter der Stereobrille ein Stereoteilbild herausgefiltert und mit dem anderen Brillenfilter das andere Stereoteilbild herausgefiltert wird, während die jeweils anderen Stereoteilbilder nicht herausgefiltert und durchgelassen und damit dem zugeordneten Auge selektiv zugeführt werden. Dieses Wellenlängenmultiplex-Stereosystem zeichnet sich durch eine sehr gute Kanaltrennung, eine hohe Lichteffizienz und einen kompakten Aufbau der Projektoren beziehungsweise Vorrichtung zur Projektion eines Stereobildes aus.

Die Erfindung wird nachfolgend anhand bevorzugter Ausführungsbeispiele unter Bezugnahme auf die Abbildungen beispielhaft erläutert. Die Erfindung ist nicht auf diese bevorzugten Ausführungsbeispiele beschränkt.
- Fig. 1: zeigt in einer schematischen Darstellung eine beispielhafte Vorrichtung zur Projektion eines Stereobildes oder Stereoteilbildes für ein Wellenlängenmultiplex-Stereosystem,
- Fig. 2: zeigt in einer schematischen Darstellung eine andere beispielhafte Vorrichtung zur Projektion eines Stereobildes oder Stereoteilbildes für ein Wellenlängenmultiplex-Stereosystem,
- Fig. 3a: zeigt in einer schematischen Darstellung ein beispielhaftes Photolumineszenzrad,
- Fig. 3b: zeigt in einer schematischen Darstellung ein weiteres beispielhaftes Photolumineszenzrad,
- Fig. 4a: zeigt in einer schematischen Darstellung ein beispielhaftes Filterrad,
- Fig. 4b: zeigt in einer schematischen Darstellung ein weiteres beispielhaftes Filterrad und
- Fig. 5: zeigt in einer schematischen Darstellung einen beispielhaften Frequenzverlauf mit den Teilspektren und Subspektren sowie dem von den blauen Laserlichtquellen emittierten blauen Laserlicht.

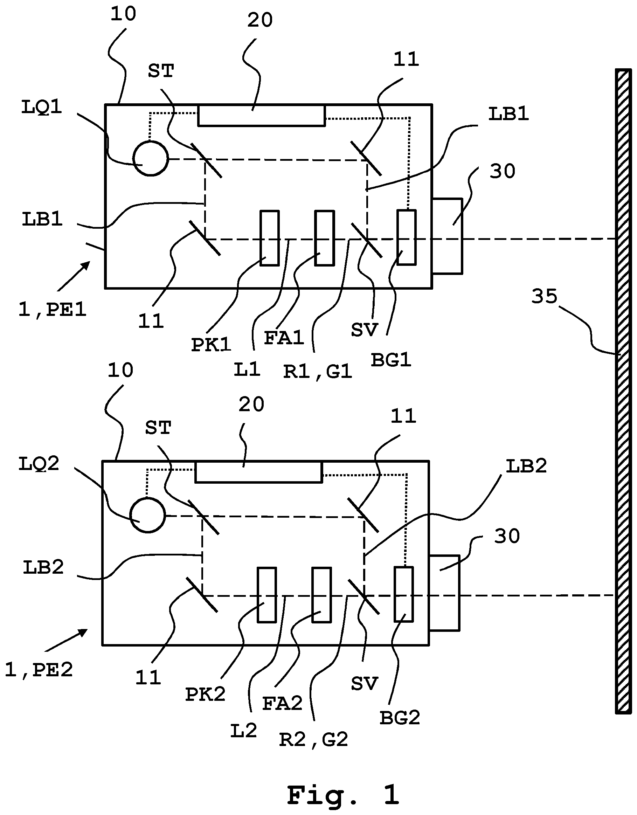

Die in Fig. 1 schematisch dargestellte Vorrichtung 1 zur Projektion eines Stereobildes oder Stereoteilbildes für ein Wellenlängenmultiplex-Stereosystem weist wenigstens eine Projektionseinheit PE1,PE2 mit jeweils einer blauen Laserlichtquelle LQ1,LQ2 auf. Jede dieser Projektionseinheiten PE1,PE2 bildet dabei einen einzelnen Projektor und damit eine Vorrichtung 1 zur Projektion eines Stereoteilbildes mit eigenem Gehäuse 10, die zusammen eine Vorrichtung 1 zur Projektion eines Stereobildes bilden.

Diese Projektionseinheiten PE1,PE2 weisen jeweils zusätzlich einen Photolumineszenzkörper PK1,PK2 auf, der der blauen Laserlichtquelle LQ1,LQ2 zugeordnet ist und so ausgebildet und angeordnet ist, dass der Photolumineszenzkörper PK1,PK2 von der blauen Laserlichtquelle LQ1,LQ2 jeweils mit schmalbandigem blauem Laserlicht LB1,LB2 so bestrahlt wird, dass er jeweils breitbandiges Licht L1,L2 ausstrahlt.

Das ausgestrahlte breitbandige Licht L1,L2 ist so breitbandig, dass wesentliche Teile des sichtbaren roten und grünen Farbspektrums des sichtbaren Lichtes umfasst sind. Dies erfolgt bevorzugt als durchgängiges Farbspektrum.

Weiterhin weist die Projektionseinheit PE1,PE2 jeweils wenigstens eine von den Photolumineszenzkörpern PK1,PK2 angesetzte Filteranordnung FA1,FA2 auf, die so ausgebildet und angeordnet ist, dass das ausgestrahlte breitbandige Licht L1,L2 jeweils in ein schmalbandiges rotes Teilspektrum R1,R2 und jeweils ein schmalbandiges grünes Teilspektrum G1,G2 gefiltert wird.

Die Filteranordnungen FA1,FA2, welche im Strahlengang nach dem Photolumineszenzkörpern PK1,PK2 und vor den bildgebenden Einheiten BG1,BG2 angeordnet sind, zeigen dabei jeweils einen einzigen Interferenzfilter, der nur zwei schmalbandige Durchlassbereiche aufweist, von denen einer entsprechend dem einen roten und einer entsprechend dem einen grünen Teilspektrum gewählt ist. Diese zwei schmalbandigen Durchlassbereiche sind entweder dem einen oder dem anderen Teilbild (linkes oder rechtes Teilbild) zugeordnet.

Ein weiterer Durchlassbereich insbesondere im blauen Bereich des sichtbaren Lichtes ist durch die Einkopplung des schmalbandigen blauen Laserlichtes LB1, LB2 in den Strahlengang nach den Filteranordnungen FA1,FA2 und vor den bildgebenden Einheiten BG1,BG2 mittels des dichroitischen Strahlvereinigers SV nicht erforderlich.

Dabei wird das Licht auf seinem Strahlengang von der blauen Laserlichtquelle LQ1,LQ2 mittels Spiegeln 11, Strahlteilern ST beziehungsweise dichroitischen Strahlvereinigern SV so geführt, dass das Licht mit Hilfe der Objektive 30 der beiden Projektionseinheiten PE1,PE2 gemeinsam auf die Projektionsfläche 35 projiziert wird. Vorzugsweise werden dabei Strahlteiler ST als teildurchlässige Spiegel verwendet, die etwa 70% des einfallenden, blauen Laserlichtes LB1,LB2 in Richtung der Photolumineszenzkörper PK1,PK2 lenken, während der Rest, etwa 30% des blauen Laserlichtes LB1,LB2, unverändert zu den bildgebenden Einheiten BG1,BG2 gelenkt wird. Diese bevorzugte Lichtverteilung führt zu einer besonders gleichmäßigen Farbverteilung, die einen angenehmen Farbeindruck des projizierten Bildes ermöglicht.

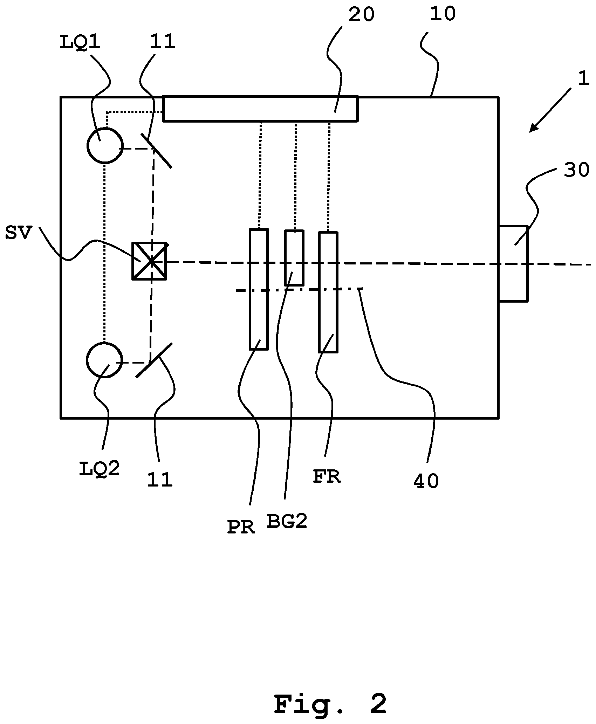

Der Strahlengang in den Figuren 1 und 2 wird dabei mit Hilfe einer gestrichelten Linie dargestellt.

Diese Projektionseinheiten PE1,PE2 ermöglichen jeweils die Projektion eines Stereoteilbildes für ein Wellenlängenmultiplex-Stereosystem, indem die Bildinformationen eines Stereoteilbildes, auch Stereohalbbild genannt, auf die erzeugten drei schmalbandigen Spektralbereiche R1,G1,LB1 beziehungsweise R2,G2,LB2 - einmal das schmalbandige blaue Laserlicht LB1,LB2, das schmalbandige rote Teilspektrum R1,R2 und das schmalbandige grüne Teilspektrum G1,G2 - mit Hilfe der beiden bildgebenden Einheiten BG1,BG2 aufmoduliert werden. Dieser Aufbau der Projektionseinheiten PE1,PE2 ermöglicht einen kompakten und wenig aufwendigen Aufbau einer erfindungsgemäßen Vorrichtung 1 zur Projektion eines Stereobildes oder Stereoteilbildes für ein Wellenlängenmultiplex-Stereosystem. Gerade durch die geringe Anzahl an aktiven Laserlichtquellen - hier zwei - gelingt es, eine robuste und wenig anfällige Vorrichtung 1 zur Projektion eines Stereobildes oder Stereoteilbildes für ein Wellenlängenmultiplex-Stereosystem zu schaffen.

Die Steuerung der Vorrichtung 1 zur Projektion eines Stereobildes erfolgt für jede Projektionseinheit PE1,PE2 mit Hilfe einer im jeweiligen Gehäuse 10 angeordneten Steuereinheit 20 die dazu ausgebildet ist, dass sie die jeweilige blaue Laserlichtquelle LQ1,LQ2 sowie die jeweilige bildgebende Einheit BG1,BG2 zielgerichtet steuern. Dies erfolgt mit Hilfe der als gepunktete Linie schematisch dargestellten Steuerleitungen.

Dabei werden beim Wellenlängenmultiplexing die erzeugten drei voneinander beabstandeten, schmalbandigen Spektralbereiche R1,G1,LB1 beziehungsweise R2,G2,LB2 - einmal das schmalbandige blaue Laserlicht LB1,LB2, das schmalbandige rote Teilspektrum R1,R2 und das schmalbandige grüne Teilspektrum G1,G2 - zur Stereoprojektion verwendet. Diese schmalbandigen Spektralbereiche R1,G1,LB1 beziehungsweise R2,G2,LB2 orientieren sich bezüglich der Lage an der spektralen Empfindlichkeit der drei Farbrezeptoren des menschlichen Auges. Dabei unterscheiden sich die schmalbandigen Spektralbereiche für das rechte Stereoteilbild von denen für das linke Stereoteilbild derart, dass die oben erläuterte Bedingung der Orthogonalität der Spektralbereiche der projizierten Stereoteilbilder erfüllt ist. Mit Hilfe einer nicht dargestellten Stereobrille werden die beiden Stereoteilbilder für die unterschiedlichen Augen des Benutzers getrennt. Hierzu zeigt die Stereobrille Brillengläser, die Interferenzfilter mit schmalbandigen Durchlassbereichen enthalten, die entsprechend den schmalbandigen Spektralbereichen R1,G1,LB1 beziehungsweise R2,G2,LB2 ausgebildet sind. Alternativ und bevorzugt haben sich auch Stereobrillen bewährt, die Interferenzfilter mit schmalbandigen Sperrbereichen, in der Art sogenannter Notchfilter, enthalten, die entweder die schmalbandigen Spektralbereichen R1,G1,LB1, welche für das eine Stereoteilbild verwendet werden, beziehungsweise die schmalbandigen Spektralbereichen R2,G2,LB2, welche für das andere Stereoteilbild verwendet werden, herausfiltern und die übrigen Frequenzbereiche weitgehend ungedämpft durchlassen.

Zur Selektion des linken Stereoteilbildes wird mit Hilfe des Interferenzfilters des linken Brillenglases das in der ersten Projektionseinheit PE1 erzeugte linke Stereoteilbild durchgelassen, während das rechte Stereoteilbild aufgrund eines orthogonalen Interferenzfilters in der Vorrichtung zur Projektion beziehungsweise der orthogonalen Laserlichtquelle für das rechte Stereoteilbild gesperrt wird. In entsprechender Weise erfolgt dies umgekehrt mit dem rechten Brillenglas der Stereobrille, welches das in der zweiten Projektionseinheit PE2 erzeugte rechte Stereoteilbild durchlässt, während das linke Stereoteilbild aufgrund eines orthogonalen Interferenzfilters in der Vorrichtung zur Projektion beziehungsweise der orthogonalen Laserlichtquelle für das linke Stereoteilbild gesperrt wird. Durch diese Ausbildung der Stereobrille, die auf die Vorrichtung 1 zur Projektion eines Stereobildes mit ihren Projektionsspektren abgestimmt ist, wird eine verlässliche Kanaltrennung geschaffen.

Für die Photolumineszenzkörper PK1,PK2 werden photolumineszierende Substanzen insbesondere fluoreszierende Substanzen aus dem Stand der Technik ausgewählt, die das von den blauen Laserlichtquellen LQ1,LQ2 erzeugte schmalbandige blaue Laserlicht LB1,LB2 effizient in ein breitbandiges, niederfrequenteres Licht L1,L2 wandeln und dieses in den weiteren Strahlengang ausstrahlen. Dabei können die Photolumineszenzkörper PK1,PK2 dieselben Substanzen für die Photolumineszenz zeigen oder nach Bedarf gerade bei in der Frequenz deutlich unterschiedlichen blauen Laserlichtquellen LQ1,LQ2 auch unterschiedliche Substanzen für die Photolumineszenz zeigen.

Diese Vorrichtung 1 zur Projektion eines Stereobildes für ein Wellenlängenmultiplex-Stereosystem erweist sich als besonders effizient in der Projektion. Sie ist dabei in ihrem Aufbau kompakt und im Betrieb wenig anfällig, da sie insbesondere die Anzahl der anfälligen aktiven Komponenten gering hält.

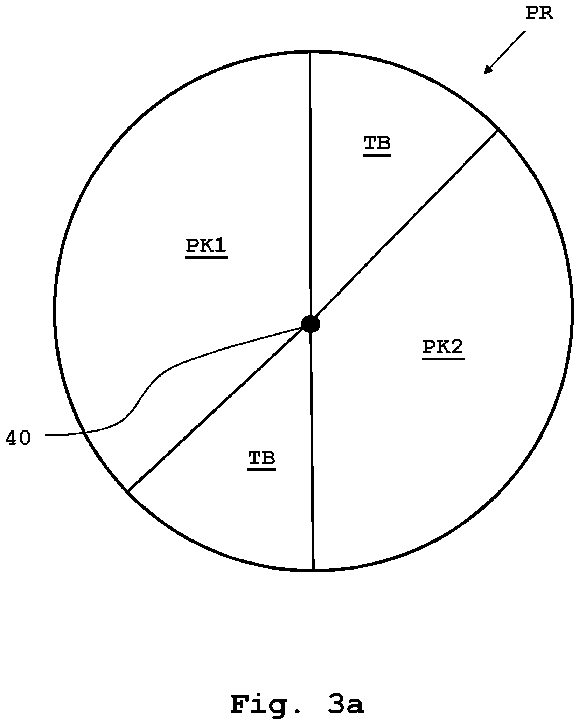

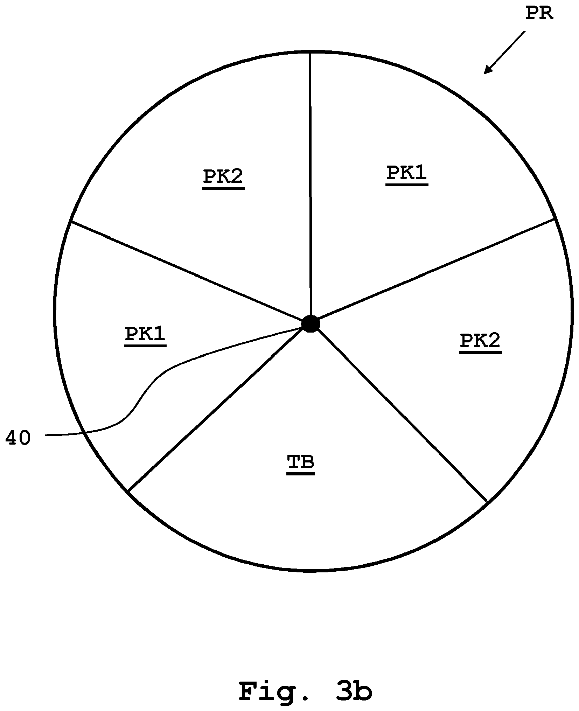

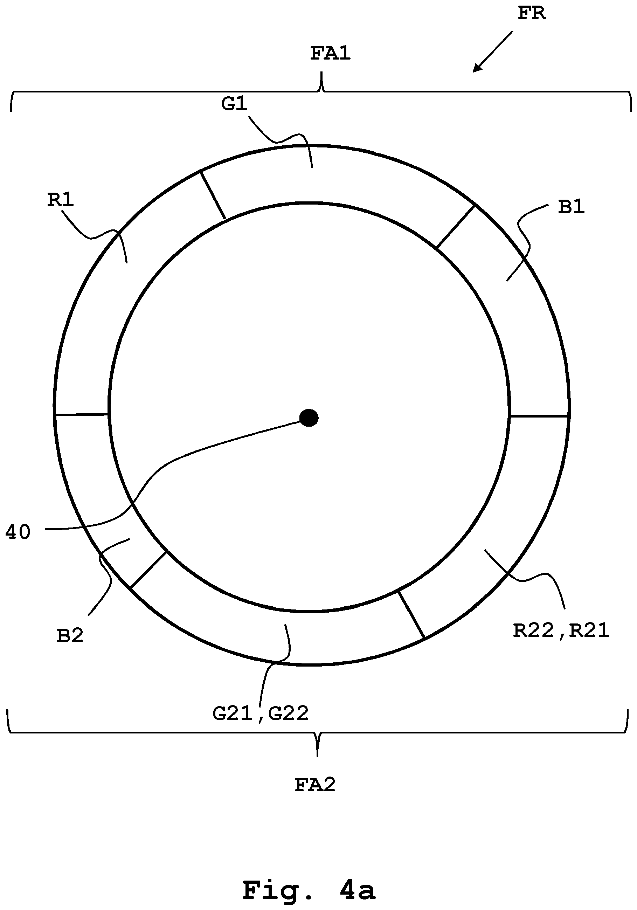

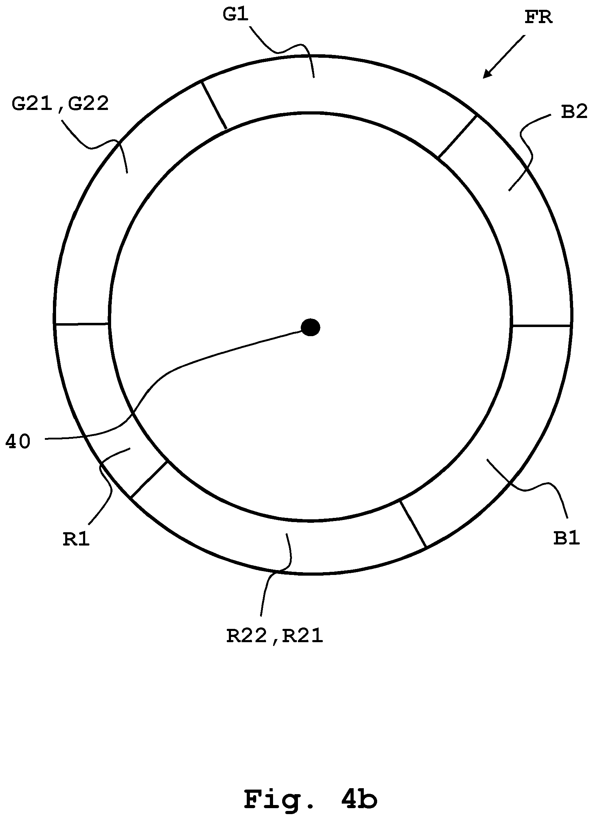

In Fig. 2 ist schematisch eine weitere beispielhafte Vorrichtung 1 zur Projektion eines Stereobildes für ein Wellenlängenmultiplex-Stereosystem dargestellt, die ein einziges gemeinsames Gehäuse 10 zeigt und somit als Stand-Alone-Stereoprojektor geeignet ist. Die Vorrichtung 1 zur Projektion eines Stereobildes für ein Wellenlängenmultiplex-Stereosystem zeigt zwei schmalbandige, blaue Laserlichtquellen LQ1,LQ2, die unterschiedliche Wellenlängenbereiche ohne spektralen Überlapp emittieren und deren schmalbandiges, blaues Laserlicht LB1, LB2 über die Umlenkspiegel 11 einem dichroitischer Strahlvereiniger SV zugeführt wird, der den vereinigten Strahl dem Photolumineszenzrad PR zuführt, der das zugeführte, schmalbandige, blaue Laserlicht LB1,LB2 durch Photolumineszenz in breitbandiges Licht L1, L2 wandelt und anschließend der bildgebenden Einheit BG2 zuführt, die auf das breitbandige Licht L1,L2 die unterschiedlichen Bildinformationen der Stereoteilbilder aufmodulieren kann. Dies erfolgt zeitlich aufeinanderfolgend also sequentiell, wobei die Wahl der Reihenfolge des Aufmodulierens der Bilddaten abhängig von der Grundfarbe beziehungsweise von der Zuordnung zum linken oder rechten Stereoteilbild erfolgen kann. Anschließend durchläuft der vereinigte Strahl nach der bildgebenden Einheit BG2 das Filterrad FR, bevor er über das eine einzige Objektiv 30 des einen Gehäuses 10 der Vorrichtung 1 zur Projektion eines Stereobildes für ein Wellenlängenmultiplex-Stereosystem auf eine Projektionsfläche 35 projiziert wird. Beispiele für Photolumineszenzräder PR und Filterräder FR sind in den Figuren 3a,3b und 4a,4b dargestellt.

Es werden durch die im Gehäuse 10 angeordnete Steuereinheit 20 sowohl die blauen Laserlichtquellen LQ1,LQ2 als auch die eine bildgebende Einheit BG2 wie auch das Photolumineszenzrad PR und das Filterrad FR so gesteuert, dass die Bilddaten des ersten Stereoteilbildes mit dem blauen Licht LB1 der Laserlichtquelle LQ1 durch Aufmodulation verbunden und das rotierende Photolumineszenzrad PR so gesteuert wird, dass der zugeordnete, erste Photolumineszenzkörper PK1 beziehungsweise eine Hälfte des transparenten Bereichs TB in den Strahlengang, der durch eine gestrichelte Linie dargestellt ist, gedreht ist und das rotierende Filterrad FR so gesteuert wird, dass die erste Filteranordnung FA1, bestehend aus den Filtern für die Teilspektren R1,G1 und für das blaue Licht B1, zeitgleich in den Strahlengang eingedreht ist. Dies kann durch das beispielhafte Photolumineszenzrad PR der Figur 3a und durch das beispielhafte Filterrad FR der Figur 4a realisiert werden.

Der Filter für das blaue Licht B1 kann als schmalbandiger Bandfilter, der das blaue Licht B1 filtert, oder auch aufgrund des schmalbandigen blauen Laserlichtes als breitbandiger insbesondere als farbunspezifischer, transparenter Filter realisiert sein.

Dadurch wird das erste Stereoteilbild mit Hilfe der ihm zugeordneten, ersten Laserlichtquelle LQ1 übertragen, indem dessen blaues Laserlicht LB1 entweder den zugeordneten Photolumineszenzkörper PK1 bestrahlt und nach der Umwandlung in breitbandiges Licht L1 entsprechend durch die Filter für das erste rote Teilspektrum R1 und das erste grüne Teilspektrum G1 selektiv gefiltert wird, oder durch den transparenten Bereich TB unverändert durch den Filter für das erste blaue Teilspektrum B1 gefiltert wird.

Während das erste Stereoteilbild erzeugt und projiziert wird, wird das zweite Stereoteilbild weder erzeugt noch projiziert und damit weder die zweite blaue Laserlichtquelle LQ2 aktiviert noch Bilddaten des zweiten Stereoteilbildes mit Hilfe der einen bildgebenden Einheit BG2 aufmoduliert noch der zweite Photolumineszenzkörper PK2 des Photolumineszenzrades PR noch ein Filter für das zweite Stereoteilbild des Filterrades FR in den Strahlengang gedreht.

Entsprechendes gilt für das zweite Stereoteilbild. Dabei werden die Bilddaten des zweiten Stereoteilbildes mit dem blauen Licht LB2 der zweiten Laserlichtquelle LQ2 durch Aufmodulation verbunden und das rotierende Photolumineszenzrad PR so gesteuert, dass der zugeordnete, zweite Photolumineszenzkörper PK2 beziehungsweise eine Hälfte des transparenten Bereichs TB in den Strahlengang, der durch eine gestrichelte Linie dargestellt ist, gedreht ist und das rotierende Filterrad FR so gesteuert wird, dass die zweite Filteranordnung FA2, bestehend aus den Filtern für die Teilspektren G21,G22,R21,R22 und für das blaue Licht B2, in den Strahlengang eingedreht ist. Dies kann durch das beispielhafte Photolumineszenzrad PR der Figur 3a und durch das beispielhafte Filterrad FR der Figur 4a realisiert werden.

Der Filter für das blaue Licht B2 kann als schmalbandiger Bandfilter, der das blaue Licht B1 filtert, oder auch aufgrund des schmalbandigen blauen Laserlichtes als breitbandiger insbesondere als farbunspezifischer, transparenter Filter realisiert sein.

Dadurch wird das zweite Stereoteilbild mit Hilfe der ihm zugeordneten, zweiten Laserlichtquelle LQ2 übertragen, indem dessen blaues Laserlicht LB2 entweder den zugeordneten Photolumineszenzkörper PK2 bestrahlt und nach der Umwandlung in breitbandiges Licht L2 entsprechend durch die Filter für das zweite rote Teilspektrum bestehend aus den beiden Subspektren R21,R22 und das zweite grüne Teilspektrum bestehend aus den beiden Subspektren G21,G22 selektiv gefiltert wird, oder durch den transparenten Bereich TB unverändert durch den Filter für das zweite blaue Teilspektrum B2 gefiltert wird.

Während das zweite Stereoteilbild erzeugt und projiziert wird, wird das erste Stereoteilbild weder erzeugt noch projiziert und damit weder die erste blaue Laserlichtquelle LQ1 aktiviert noch Bilddaten des ersten Stereoteilbildes mit Hilfe der einen bildgebenden Einheit BG2 aufmoduliert noch der erste Photolumineszenzkörper PK1 des Photolumineszenzrades PR noch ein Filter für das erste Stereoteilbild des Filterrades FR in den Strahlengang gedreht.

Um dies besonders verlässlich zu erreichen, hat es sich bewährt, das Photolumineszenzrad PR und das Filterrad FR um eine gemeinsame Drehachse 40 rotieren zu lassen. Hierdurch ist eine sichere und effiziente Durchstrahlung dieser beiden Räder PR,FR mit den enthaltenen Photolumineszenzkörpern PK1,PK2 beziehungsweise dem transparenten Bereich TB und den Filteranordnungen FA1,FA2 bei geringem technischen Aufwand ermöglicht.

Neben der Möglichkeit, die Räder mechanisch so miteinander zu koppeln, dass diese mit gleicher Geschwindigkeit und gleicher Phasenbeziehung und damit synchron rotieren, können diese auch, wie in Fig. 2 dargestellt, separat betrieben werden. Damit lässt sich eine sequenzielle Trennung der verschiedenen Zustände bei der Projektion des ersten und zweiten Stereoteilbildes gewährleisten.

In Fig. 3a ist ein beispielhafter Aufbau eines ersten Photolumineszenzrades PR dargestellt, welches beispielsweise in der Vorrichtung 1 zur Projektion eines Stereobildes oder Stereoteilbildes für ein Wellenlängenmultiplex-Stereosystem der Fig. 2 verwendet wird.

Die kreisförmige Scheibe des Photolumineszenzrades PR rotiert ebenso um die Drehachse 40. Sie zeigt vier Kreissegmente, die die gesamte Kreisfläche des Photolumineszenzrades PR einnehmen. Die beiden kleinsten Segmente sind als transparente Bereiche TB einander auf der Scheibe gegenüberliegend ausgebildet. Die transparenten Bereiche TB sind dafür vorgesehen, das einfallende Licht transparent, das heißt mit nur geringer Dämpfung und ohne Farbveränderung, durch den transparenten Bereich TB transmittieren zu lassen.

Die beiden anderen, größeren Kreissegmente bilden die Photolumineszenzkörper PK1,PK2, die in dem dargestellten Beispiel durch das Aufbringen von identischen phosphoreszierenden Substanzen gebildet sind.

Durch die flächenmäßig größeren Photolumineszenzkörper PK1, PK2 wird es möglich, die geringere Strahlungsintensität der von der Phosphoreszenzsubstanz emittierten Strahlung relativ zu dem schmalbandigen Laserlicht LB1,LB2, das durch den transparenten Bereich TB praktisch ungedämpft hindurchgetreten ist, zumindest teilweise über eine vollständige Rotation des Photolumineszenzrades PR auszugleichen. Um dies zu erreichen, ist die Fläche der Photolumineszenzkörper PK1,PK2 im dargestellten Beispiel etwa dreimal so groß wie die transparenten Bereiche TB.

In Fig. 3b ist ein beispielhafter Aufbau eines anderen zweiten Photolumineszenzrades PR dargestellt. Die kreisförmige Scheibe des Photolumineszenzrades PR rotiert um die Drehachse 40. Sie zeigt fünf Kreissegmente, die die gesamte Kreisfläche des Photolumineszenzrades PR einnehmen. Das größte Segment bildet den transparenten Bereich TB, der dafür vorgesehen ist, das einfallende Licht transparent, das heißt mit nur geringer Dämpfung und ohne Farbveränderung durch den transparenten Bereich TB transmittieren zu lassen.

Die vier anderen, etwas kleineren Kreissegmente bilden die Photolumineszenzkörper PK1,PK2, die in dem dargestellten Beispiel durch das Aufbringen von unterschiedlichen phosphoreszierenden Substanzen gebildet sind. Es sind jeweils zwei Kreissegmente als Photolumineszenzkörper PK1 und zwei als Photolumineszenzkörper PK2 vorgesehen, die sich entlang des Umfangs abwechseln. Für die die Photolumineszenzkörper PK1,PK2 sind dabei solche Phosphoreszenzsubstanzen gewählt, die durch das schmalbandige blaue Laserlicht LB1,LB2 angeregt werden können und dadurch ein ausreichend starkes, breitbandiges Licht L1,L2 emittieren, das der im Strahlengang nachfolgenden bildgebenden Einheit BG2 zugeführt wird. Durch die in Summe flächenmäßig größeren Photolumineszenzkörper PK1,PK2 als der Transparaente Bereich TB wird es möglich, die geringere Strahlungsintensität der von der Phosphoreszenzsubstanz emittierten Strahlung relativ zu dem schmalbandigen Laserlicht LB1,LB2, das durch den transparenten Bereich TB praktisch ungedämpft hindurchgetreten ist, zumindest teilweise über eine vollständige Rotation des Photolumineszenzrades PR auszugleichen. Durch die Wahl der Größe der Kreissegmente gelingt es die vergleichbaren Vorteile des in Fig. 3a dargestellten rotierenden Photolumineszenzrades PR zu erreichen.

Weiterhin ermöglicht das in Fig. 3a und 3b dargestellte rotierende Photolumineszenzrad PR, das entweder im Reflexionsbetrieb und im Transmissionsbetrieb verwendet wird, eine Beschränkung des Wärmeeintrages auf den oder die Photolumineszenzkörper PK1,PK2, da sich der räumlich begrenzte bestrahlte Bereich des Photolumineszenzkörpers PK1,PK2 durch die Rotation des Photolumineszenzrades PR in den Strahlengang und aus diesem herausbewegt und damit nur kurze Zeit in dem Strahlengang befindet und damit der Wärmeeintrag durch das Laserlicht LB1,LB2 begrenzt wird. Dies erhöht die Robustheit der Vorrichtung 1 zur Projektion eines Stereobildes oder Stereoteilbildes für ein Wellenlängenmultiplex-Stereosystem der Fig. 2 erheblich.

In Fig. 4a ist schematisch ein beispielhafter Aufbau eines ersten Filterrades FR dargestellt, welches beispielsweise in der Vorrichtung 1 zur Projektion eines Stereobildes oder Stereoteilbildes für ein Wellenlängenmultiplex-Stereosystem der Fig. 2 verwendet wird.

Die kreisförmige Scheibe des Filterrades FR rotiert dabei um die Drehachse 40. Die Filter der Filteranordnungen FA1,FA2 sind auf dem Filterrad FR sequenziell hintereinander, am äußeren Rand der Scheibe einen Kreisring bildend so angeordnet, dass zuerst die eine Filteranordnung FA1 und anschließend die andere Filteranordnung FA2 in den Strahlengang der Vorrichtung 1 rotierend eingedreht wird. Dies wiederholt sich kontinuierlich bei der Rotation des Filterrades FR. Von der ersten Filteranordnung FA1 wird zuerst der Filter für das erste blaue Teilspektrum B1, dann der Filter für das erste grüne Teilspektrum G1, gefolgt von dem Filter für das erste rote Teilspektrum R1 in den Strahlengang eingedreht. Danach folgen die Filter der zweiten Filteranordnung FA2. Von der zweiten Filteranordnung FA2 wird zuerst der Filter für das zweite blaue Teilspektrum B2, gefolgt von dem einen gemeinsamen Filter für das das grüne Subspektrum G21 und für das zweite grüne Subspektrum G22, gefolgt von dem gemeinsamen Filter für das rote Subspektrum R21 und für das zweite rote Subspektrum R22 in den Strahlengang eingedreht.

Dabei wird das zweite rote Teilspektrum durch die beiden Subspektren R21 und R22 gebildet, während das zweite grüne Teilspektrum durch die beiden Subspektren G21 und G22 gebildet ist.

Die Filter für die blauen Teilspektren B1,B2 sind dafür vorgesehen, mögliches Störlicht zu reduzieren und möglichst nur das durch den transparenten Bereich TB des Photolumineszenzrades PR hindurchgetretene schmalbandige Laserlicht LB1,LB2 hindurchtreten zu lassen, weshalb die beiden Filter für die blauen Teilbereiche B1,B2 aufgrund der Orthogonalität des Lichtes LB1,LB2 der Laserlichtquellen LQ1,LQ2 nicht notwendigerweise orthogonal zueinander sein müssen.

Die beiden Subspektren, das erste rote Subspektrum R21 und das zweite grüne Subspektrum G22, bilden gemeinsam das Subspektrum R21-G22, welches als ein gemeinsamer durchgängiger Frequenzbereich ausgebildet ist.

Die Filteranordnungen FA1,FA2 sind etwa gleich groß ausgebildet, da dadurch eine vergleichbare Lichtstärke der durch sie hindurchgetretenen Lichtstrahlung ermöglicht ist.

Durch diese Filteranordnungen FA1,FA2 auf dem Filterrad FR in Verbindung mit dem Photolumineszenzrad PR aus Figur 3a sowie den Laserlichtquellen LQ1,LQ2 ist es möglich, dass die projizierten Stereoteilbilder orthogonal zueinander sind und damit eine wechselseitige Störung bei der Betrachtung des projizierten Stereobildes aus den beiden Stereoteilbildern mit Hilfe der zugehörigen Stereobrille nach dem Wellenlängenmultiplex-Prinzips ausgeschlossen ist.

In Fig. 4b ist schematisch ein beispielhafter Aufbau eines anderen, zweiten Filterrades FR dargestellt. Es zeigt einen vergleichbaren grundsätzlichen Aufbau wie das beispielhafte erste Filterrad FR aus Figur 4a. Sie unterscheiden sich durch die Reihenfolge der verschiedenen Filter B1,B2,R1,R21,R22, G1,G21,G22 der beiden Filteranordnungen FA1,FA2.

Das andere, zweite Filterrad FR zeigt eine Reihenfolge an Filtern, die sequentiell aufeinanderfolgend Filter um Filter der beiden Filteranordnungen FA1,FA2 angeordnet zeigt. Die Filter werden dabei bei einer einzigen Umdrehung des Filterrades FR in folgender Reihenfolge in den Strahlengang eingedreht: der Filter für das erste blaue Teilspektrum B1, der Filter für das zweite blaue Teilspektrum B2, der Filter für das erste grüne Teilspektrum G1, der gemeinsame Filter für das grüne Subspektrum G21 und für das zweite grüne Subspektrum G22, der Filter für das erste rote Teilspektrum R1 und der gemeinsame Filter für das rote Subspektrum R21 und für das zweite rote Subspektrum R22. Dadurch wird während einer Rotation des Filterrades FR abwechselnd das der ersten Filteranordnung zugeordnete erste Stereoteilbild mehrfach mit dem der zweiten Filteranordnung zugeordneten zweiten Stereoteilbild wiedergegeben und dadurch die Dunkelphase für das linke bzw. rechte Auge deutlich verkürzt. Dies führt zu einer angenehmen Wahrnehmung des projizierten Stereobildes, welche sich durch eine sehr geringe Flackerneigung auszeichnet.

Durch diese Filteranordnungen FA1,FA2 auf dem anderen, zweiten Filterrad FR aus Figur 4b in Verbindung mit dem Photolumineszenzrad PR aus Figur 3b sowie den Laserlichtquellen LQ1,LQ2 ist es zudem möglich, dass die projizierten Stereoteilbilder orthogonal zueinander sind und damit eine wechselseitige Störung bei der Betrachtung des projizierten Stereobildes aus den beiden Stereoteilbildern mit Hilfe der zugehörigen Stereobrille nach dem Wellenlängenmultiplex-Prinzip ausgeschlossen ist.

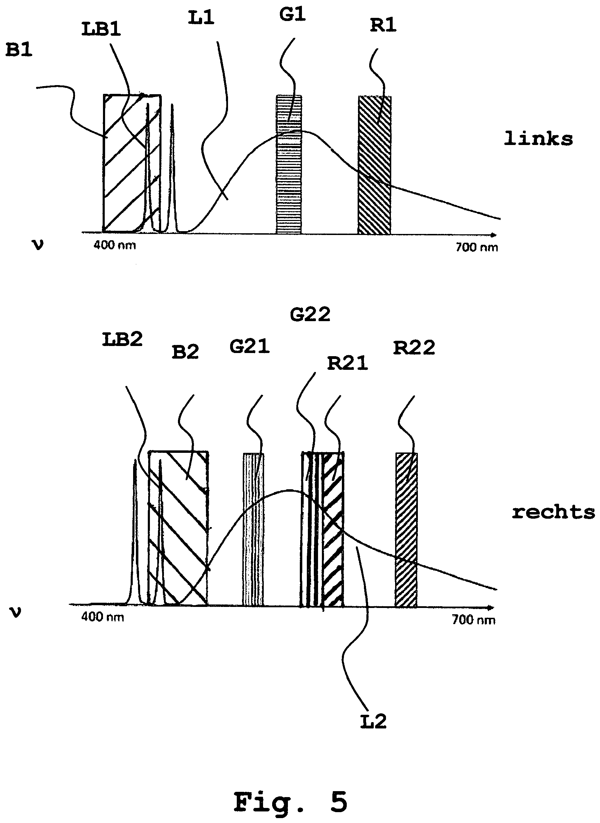

In Fig. 5 ist schematisch die Frequenzverteilung der ersten Filteranordnung FA1 und der zweiten Filteranordnung FA2 aus Figur 4a sowie die Frequenzverteilung der emittierten Lichter, die durch die Laserlichtquellen LQ1,LQ2 sowie die Photolumineszenzkörper PK1,PK2 aus Figur 3a erzeugt werden, dargestellt. Die emittierten Lichter setzen sich dabei aus dem ersten schmalbandigen blauen Laserlicht LB1 der ersten Laserlichtquelle LQ1, aus dem zweiten schmalbandigen blauen Laserlicht LB2 der zweiten Laserlichtquelle LQ2, aus dem ersten breitbandigen emittierten Licht L1 des ersten Photolumineszenzkörpers PK1 sowie aus dem zweiten breitbandigen emittierten Licht L2 des zweiten Photolumineszenzkörpers PK2 zusammen.

Das ausgestrahlte breitbandige Licht L1,L2 ist dabei so breitbandig, dass wesentliche Teile des sichtbaren roten und grünen Farbspektrums des sichtbaren Lichtes durchgängig ohne Lücken umfasst sind.

Mit Hilfe der Steuereinheit 20 ist sichergestellt, dass zeitgleich die erste Laserlichtquelle LQ1 aktiv ist und die bildgebende Einheit BG2 mit Bildern für das linke Stereoteilbild beaufschlagt wird und die erste Filteranordnung FA1 wie auch der Photolumineszenzkörper PK1 mit einem Teil des transparenten Bereichs TB des Photolumineszenzrades PR aktiv sind oder sich im Strahlengang befinden. In entsprechender Weise ist zeitgleich die zweite Laserlichtquelle LQ2 aktiv und die bildgebende Einheit BG2 mit Bildern für das rechte Stereoteilbild beaufschlagt und die zweite Filteranordnung FA2 wie auch der Photolumineszenzkörper PK2 mit dem anderen Teil des transparenten Bereichs TB des Photolumineszenzrades PR aktiv oder im Strahlengang eingedreht.

Dadurch ist die sichere Kanaltrennung des linken und rechten Stereoteilbildes ermöglicht und durch eine entsprechende Stereobrille gegeben.

### Bezugszeichenliste

- 1: Vorrichtung zur Projektion eines Stereobildes oder Stereoteilbildes für ein Wellenlängenmultiplex-Stereosystem
- 10: Gehäuse
- 11: Spiegel
- 20: Steuereinheit
- 30: Objektiv
- 35: Projektionsfläche
- 40: Drehachse
- B1,B2: Blaues Teilspektrum
- BG1,BG2: Bildgebende Einheit
- FA1,FA2: Filteranordnung
- FR: Filterrad
- G1,G2: Grünes Teilspektrum
- G21,G22: Grünes Subspektrum
- G22-R21: Gemeinsames Subspektrum
- L1,L2: Ausgestrahltes breitbandiges Licht
- LB1,LB2: Blaues Laserlicht
- LQ1,LQ2: Blaue Laserlichtquelle
- PE1,PE2: Projektionseinheit
- PK1,PK2: Photolumineszenzkörper
- PR: Photolumineszenzrad
- R1,R2: Rotes Teilspektrum
- R21,R22: Rotes Subspektrum
- ST: Strahlteiler
- SV: Strahlvereiniger
- TB: Transparenter Bereich

## Patentansprüche

1. Vorrichtung zur Projektion eines Stereobildes für ein Wellenlängenmultiplex-Stereosystem,
wobei die Vorrichtung zur Projektion wenigstens eine Projektionseinheit (PE1) mit einer blauen Laserlichtquelle (LQ1) aufweist,
und die wenigstens eine Projektionseinheit (PE1) wenigstens ein schmalbandiges rotes Teilspektrum (R1) mit einer Halbwertsbreite unter 25nm und ein schmalbandiges grünes Teilspektrum (G1) mit einer Halbwertsbreite unter 25nm ausstrahlt,
wobei sie eine zweite Projektionseinheit (PE2) mit einer zweiten blauen Laserlichtquelle (LQ2) aufweist,
und die wenigstens eine zweite Projektionseinheit (PE2) wenigstens ein zweites schmalbandiges rotes Teilspektrum (R2) und ein zweites schmalbandiges grünes Teilspektrum (G2) mit einer Halbwertsbreite unter 25nm ausstrahlt,
wobei die Teilspektren (G1, G2, R1, R2) und die blauen Lichter (LB1, LB2) der Laserlichtquellen (LQ1, LQ2) so gewählt sind, dass die projizierten Stereoteilbilder wechselseitig orthogonal zueinander ausgebildet sind
**dadurch gekennzeichnet,**
**dass** die Projektionseinheit (PE1) einen Photolumineszenzkörper (PK1) aufweist, der der blauen Laserlichtquelle (LQ1) zugeordnet ist und so ausgebildet und angeordnet ist, dass der Photolumineszenzkörper (PK1) von der blauen Laserlichtquelle (LQ1) mit blauem Licht (LB1) bestrahlt wird, dass der Photolumineszenzkörper (PK1) breitbandiges Licht (L1) ausstrahlt, welches Licht der Grundfarbe rot und grün enthält,
**dass** sie eine Filteranordnung (FA1) aufweist, die so ausgebildet und angeordnet ist, dass das ausgestrahlte breitbandige Licht (L1) in wenigstens ein schmalbandiges rotes Teilspektrum (R1) mit einer Halbwertsbreite unter 25nm und ein schmalbandiges grünes Teilspektrum (G1) mit einer Halbwertsbreite unter 25nm gefiltert wird,
und **dass** wenigstens ein Teilspektrum (G2, R2) durch zwei schmalbandige, gering beabstandete und benachbarte Subspektren (G21, G22; R21, R22) gebildet ist, dass die zweite Projektionseinheit (PE2) einen zweiten Photolumineszenzkörper (PK2) aufweist, der einer zweiten blauen Laserlichtquelle (LQ2) zugeordnet ist und so ausgebildet und angeordnet ist, dass der zweite Photolumineszenzkörper (PK2) von der zweiten blauen Laserlichtquelle (LQ2) mit blauem Licht (LB2) so bestrahlt wird, dass er breitbandiges Licht (L2) ausstrahlt,
und die eine zweite Filteranordnung (FA2) aufweist, die so ausgebildet und angeordnet ist, dass das ausgestrahlte breitbandige Licht (L2) in wenigstens ein zweites schmalbandiges rotes Teilspektrum (R2) filtert und ein zweites schmalbandiges grünes Teilspektrum (G2) gefiltert wird.

2. Vorrichtung zur Projektion eines Stereobildes oder Stereoteilbildes für ein Wellenlängenmultiplex-Stereosystem nach Anspruch 1,
wobei zwei benachbarte Subspektren (G22, R21) unterschiedlicher Teilspektren (G2, R2) miteinander zu einem gemeinsamen Subspektrum (G22-R21) verbunden sind.

3. Vorrichtung zur Projektion eines Stereobildes oder Stereoteilbildes für ein Wellenlängenmultiplex-Stereosystem nach Anspruch 2,
wobei die orthogonalen Durchlassbereiche der schmalbandigen Teilspektren und Subspektren eine zentrale Wellenlänge im Bereich von 525nm (G1), 545nm (G21), 580nm (G22-R21), 610nm (R1), 635nm (R22) oder im Bereich von 549nm (G1), 508nm (G21), 580nm (G22-R21), 609nm (R1), oberhalb von 640nm insbesondere von 664nm (R22) aufweisen.

4. Vorrichtung zur Projektion eines Stereobildes oder Stereoteilbildes für ein Wellenlängenmultiplex-Stereosystem nach einem der Ansprüche 1 bis 3, wobei eine oder mehrere Filteranordnungen (FA1, FA2) mehrere optische Filter mit jeweils einem Durchlassbereich entsprechend mehreren Teilspektren (G1, G2, R1, R2) und/oder entsprechend den blauen Lichtern (LB1, LB2) aufweisen.

5. Vorrichtung zur Projektion eines Stereobildes oder Stereoteilbildes für ein Wellenlängenmultiplex-Stereosystem nach einem der Ansprüche 1 bis 4, wobei die zwei Projektionseinheiten (PE1, PE2) einen gemeinsamen Photolumineszenzkörper (PK1, PK2) aufweisen,
der gemeinsame Photolumineszenzkörper (PK1, PK2) den zwei blauen Laserlichtquellen (LQ1, LQ2) zugeordnet ist und so ausgebildet und angeordnet ist, dass der gemeinsame Photolumineszenzkörper (PK1, PK2) von den zwei blauen Laserlichtquellen (LQ1, LQ2) mit blauem Licht (LB1, LB2) so bestrahlt wird, dass er breitbandiges Licht (L1, L2) ausstrahlt und Filteranordnungen (FA1, FA2) aufweist, die so ausgebildet und angeordnet sind, dass das ausgestrahlte breitbandige Licht (L1, L2) in wenigstens zwei schmalbandige rote Teilspektren (R1, R2) filtert und wenigstens zwei schmalbandige grüne Teilspektren (G1, G2) filtert,
wobei die Teilspektren (G1, G2, R1, R2) und die blauen Lichter (LB1, LB2) der Laserlichtquellen (LQ1, LQ2) so gewählt sind, das die projizierten Stereoteilbilder wechselseitig orthogonal zueinander ausgebildet sind.

6. Vorrichtung zur Projektion eines Stereobildes oder Stereoteilbildes für ein Wellenlängenmultiplex-Stereosystem nach einem der Ansprüche 1 bis 5, wobei die orthogonalen Durchlassbereiche der schmalbandigen Teilspektren eine zentrale Wellenlänge im Bereich von 525nm (G1), 545nm (G2), 610nm (R1), 635nm (R2) aufweisen.

7. Vorrichtung zur Projektion eines Stereobildes oder Stereoteilbildes für ein Wellenlängenmultiplex-Stereosystem nach einem der Ansprüche 1 bis 6, wobei die Filteranordnungen optische Filter aufweisen, die auf einem Filterrad (FR) sequenziell hintereinander angeordnet sind.

8. Vorrichtung zur Projektion eines Stereobildes oder Stereoteilbildes für ein Wellenlängenmultiplex-Stereosystem nach einem der Ansprüche 5 bis 7,
wobei zwischen den zwei Laserlichtquellen (LQ1, LQ2) und
dem gemeinsamen Photolumineszenzkörper (PK1, PK2) ein Strahlvereiniger (SV) angeordnet ist.

9. Vorrichtung zur Projektion eines Stereobildes oder Stereoteilbildes für ein Wellenlängenmultiplex-Stereosystem nach einem der Ansprüche 1 bis 8, wobei im Strahlengang nach dem zugeordneten Photolumineszenzkörper (PK1, PK2) eine bildgebende Einheit (BG1, BG2) insbesondere nach der Filteranordnung (FA1, FA2) angeordnet ist.

10. Vorrichtung zur Projektion eines Stereobildes oder Stereoteilbildes für ein Wellenlängenmultiplex-Stereosystem nach Anspruch 7 oder 9,
wobei die zwei Photolumineszenzkörper (PK1, PK2) auf einem Photolumineszenzrad (PR) sequenziell hintereinander angeordnet sind
und das Photolumineszenzrad (PR) im Strahlengang vor den Filteranordnungen (FA1, FA2), die den Photolumineszenzkörpern (PK1, PK2) des Photolumineszenzrades (PR) zugeordnet sind,
und insbesondere wenigstens eine bildgebende Einheit (BG1, BG2) nach dem Photolumineszenzrad (PR) und/oder den Filteranordnungen (FA1, FA2)angeordnet ist.

11. Vorrichtung zur Projektion eines Stereobildes oder Stereoteilbildes für ein Wellenlängenmultiplex-Stereosystem nach Anspruch 10,
wobei auf dem Photolumineszenzrad (PR) zwischen den mehreren Photolumineszenzkörpern (PK1, PK2) ein oder mehrere transparente Bereiche (TB) angeordnet sind.

12. Vorrichtung zur Projektion eines Stereobildes oder Stereoteilbildes für ein Wellenlängenmultiplex-Stereosystem nach einem der Ansprüche 1 bis 11, wobei zwischen Photolumineszenzkörper (PK1, PK2) und zugeordneter Filteranordnung (FA1, FA2) ein Strahlteiler (ST) angeordnet ist.

13. Vorrichtung zur Projektion eines Stereobildes oder Stereoteilbildes für ein Wellenlängenmultiplex-Stereosystem nach Anspruch 12,
wobei der Strahlteiler (ST) die Filteranordnung (FA1, FA2) enthält.

14. Vorrichtung zur Projektion eines Stereobildes oder Stereoteilbildes für ein Wellenlängenmultiplex-Stereosystem nach einem der Ansprüche 1 bis 13, wobei wenigstens eine Laserlichtquelle (LQ1, LQ2) schmalbandiges blaues Laserlicht mit einer Wellenlänge von 445nm (LQ1) oder 465nm (LQ2) aussendet.

15. Vorrichtung zur Projektion eines Stereobildes oder Stereoteilbildes für ein Wellenlängenmultiplex-Stereosystem nach einem der Ansprüche 1 bis 14, wobei wenigstens eine rote Laserlichtquelle vorgesehen ist, die schmalbandiges rotes Laserlicht erzeugt, welches in den Strahlengang vor der bildgebenden Einheit (BG1, BG2) eingekoppelt ist.

16. Wellenlängenmultiplex-Stereosystem mit wenigstens einer Vorrichtung zur Projektion eines Stereobildes oder Stereoteilbildes nach einem der Ansprüche 1 bis 15 und mit wenigstens einer Stereobrille, die geeignet ist, mit einem Brillenfilter ein Stereoteilbild herauszufiltern und mit dem anderen Brillenfilter das andere Stereoteilbild herauszufiltern.

## Claims

1. Device for projecting a stereo image for a wavelength division multiplexing stereo system,
the device for projecting comprising at least one projection unit (PE1) having a blue laser light source (LQ1),
and the at least one projection unit (PE1) emitting at least one narrow-band red part-spectrum (R1) having a half-width of less than 25 nm, and a narrow-band green part-spectrum (G1) having a half-width of less than 25 nm,
the device for projecting comprising a second projection unit (PE2) having a second blue laser light source (LQ2),
and the at least one second projection unit (PE2) emitting at least a second narrow-band red part-spectrum (R2) and a second narrow-band green part-spectrum (G2) having a half-width of less than 25 nm,
the part-spectra (G1, G2, R1, R2) and the blue lights (LB1, LB2) of the laser light sources (LQ1, LQ2) being selected such that the projected stereo partial images are mutually orthogonal to one another
**characterized in that**
the projection unit (PE1) comprises a photoluminescent body (PK1) which is assigned to the blue laser light source (LQ1) and is designed and arranged such that the photoluminescent body (PK1) is irradiated with blue light (LB1) by means of the blue laser light source (LQ1), such that the photoluminescent body (PK1) emits broadband light (L1) which contains light of the primary colors red and green,
**in that** the projection unit comprises a filter assembly (FA1) which is designed and arranged such that the emitted broadband light (L1) is filtered into at least one narrow-band red part-spectrum (R1) having a half-width of less than 25 nm, and a narrow-band green part-spectrum (G1) having a half-width of less than 25 nm,
**and in that** at least one part-spectrum (G2, R2) is formed by two narrow-band, closely spaced and adjacent part-spectra (G21, G22; R21, R22), **in that** the second projection unit (PE2) comprises a second photoluminescent body (PK2) which is assigned to a second blue laser light source (LQ2) and is designed and arranged such that the second photoluminescent body (PK2) is irradiated with blue light (LB2) by means of the second blue laser light source (LQ2) such that it emits broadband light (L2),
and which comprises a second filter assembly (FA2) which is designed and arranged such that the emitted broadband light (L2) filters into at least a second narrow-band red part-spectrum (R2), and a second narrow-band green part-spectrum (G2) is filtered.

2. Device for projecting a stereo image or stereo partial image for a wavelength division multiplexing stereo system according to claim 1,
wherein two adjacent subspectra (G22, R21) of different part-spectra (G2, R2) are combined to form a common subspectra (G22-R21).

3. Device for projecting a stereo image or stereo partial image for a wavelength division multiplexing stereo system according to claim 2,
wherein the orthogonal passbands of the narrow-band part-spectra and subspectra have a central wavelength in the range of 525 nm (G1), 545 nm (G21), 580 nm (G22-R21), 610 nm (R1), 635 nm (R22) or in the range of 549 nm (G1), 508 nm (G21), 580 nm (G22-R21), 609 nm (R1), above 640 nm, in particular of 664 nm (R22).

4. Device for projecting a stereo image or stereo partial image for a wavelength division multiplexing stereo system according to any of claims 1 to 3,
wherein one or more filter assemblies (FA1, FA2) comprise a plurality of optical filters, in each case having a passband corresponding to a plurality of part-spectra (G1, G2, R1, R2) and/or corresponding to the blue lights (LB1, LB2).

5. Device for projecting a stereo image or stereo partial image for a wavelength division multiplexing stereo system according to any of claims 1 to 4,
wherein the two projection units (PE1, PE2) have a common photoluminescent body (PK1, PK2),
the common photoluminescent body (PK1, PK2) is assigned to the two blue laser light sources (LQ1, LQ2) and is designed and arranged such that the common photoluminescent body (PK1, PK2) is irradiated with blue light (LB1, LB2) by means of the two blue laser light sources (LQ1, LQ2) such that it emits broadband light (L1, L2), and comprises filter assemblies (FA1, FA2) which are designed and arranged such that the emitted broadband light (L1, L2) filters into at least two narrow-band red part-spectra (R1, R2) and filters at least two narrow-band green part-spectra (G1, G2),
wherein the part-spectra (G1, G2, R1, R2) and the blue lights (LB1, LB2) of the laser light sources (LQ1, LQ2) are selected such that the projected stereo partial images are mutually orthogonal to one another.

6. Device for projecting a stereo image or stereo partial image for a wavelength division multiplexing stereo system according to any of claims 1 to 5,
wherein the orthogonal passbands of the narrow-band part-spectra have a central wavelength in the range of 525 nm (G1), 545 nm (G2), 610 nm (R1), 635 nm (R2).

7. Device for projecting a stereo image or stereo partial image for a wavelength division multiplexing stereo system according to any of claims 1 to 6,
wherein the filter assemblies comprise optical filters which are arranged sequentially one behind the other on a filter wheel (FR).

8. Device for projecting a stereo image or stereo partial image for a wavelength division multiplexing stereo system according to any of claims 5 to 7,
wherein a beam combiner (SV) is arranged between the two laser light sources (LQ1, LQ2) and the common photoluminescent body (PK1, PK2).

9. Device for projecting a stereo image or stereo partial image for a wavelength division multiplexing stereo system according to any of claims 1 to 8,
wherein an imaging unit (BG1, BG2) is arranged downstream of the assigned photoluminescent body (PK1, PK2) in the beam path, in particular downstream of the filter assembly (FA1, FA2).

10. Device for projecting a stereo image or stereo partial image for a wavelength division multiplexing stereo system according to either claim 7 or claim 9,
wherein the two photoluminescent bodies (PK1, PK2) are arranged sequentially one behind the other on a photoluminescent wheel (PR)
and the photoluminescent wheel (PR) is arranged in the beam path upstream of the filter assemblies (FA1, FA2) which are assigned to the photoluminescent bodies (PK1, PK2) of the photoluminescent wheel (PR),
and in particular at least one imaging unit (BG1, BG2) is arranged downstream of the photoluminescence wheel (PR) and/or the filter assemblies (FA1, FA2).

11. Device for projecting a stereo image or stereo partial image for a wavelength division multiplexing stereo system according to claim 10,
wherein one or more transparent regions (TB) are arranged on the photoluminescent wheel (PR) between the plurality of photoluminescent bodies (PK1, PK2).

12. Device for projecting a stereo image or stereo partial image for a wavelength division multiplexing stereo system according to any of claims 1 to 11,
wherein a beam splitter (ST) is arranged between the photoluminescent body (PK1, PK2) and the assigned filter assembly (FA1, FA2).

13. Device for projecting a stereo image or stereo partial image for a wavelength division multiplexing stereo system according to claim 12,
wherein the beam splitter (ST) contains the filter assembly (FA1, FA2).

14. Device for projecting a stereo image or stereo partial image for a wavelength division multiplexing stereo system according to any of claims 1 to 13,
wherein at least one laser light source (LQ1, LQ2) emits narrow-band blue laser light having a wavelength of 445 nm (LQ1) or 465 nm (LQ2).

15. Device for projecting a stereo image or stereo partial image for a wavelength division multiplexing stereo system according to any of claims 1 to 14,
wherein at least one red laser light source is provided which generates narrow-band red laser light which is coupled into the beam path upstream of the imaging unit (BG1, BG2).

16. Wavelength division multiplexing stereo system having at least one device for projecting a stereo image or stereo partial image according to any of claims 1 to 15, and having at least one pair of stereo glasses which are suitable for filtering out one stereo partial image by means of one glasses filter and for filtering out the other stereo partial image by means of the other glasses filter.

## Revendications

1. Dispositif pour la projection d'une image stéréoscopique pour un système stéréoscopique à multiplexage en longueur d'onde,
dans lequel le dispositif pour la projection présente au moins une unité de projection (PE1) comportant une source de lumière laser bleue (LQ1),
et l'au moins une unité de projection (PE1) émet au moins un spectre partiel rouge à bande étroite (R1) avec une largeur de demi-valeur inférieure à 25 nm et un spectre partiel vert à bande étroite (G1) avec une largeur de demi-valeur inférieure à 25 nm,
dans lequel il présente une seconde unité de projection (PE2) comportant une seconde source de lumière laser bleue (LQ2),
et l'au moins une seconde unité de projection (PE2) émet au moins un second spectre partiel rouge à bande étroite (R2) et un second spectre partiel vert à bande étroite (G2) avec une largeur de demi-valeur inférieure à 25 nm,
dans lequel les spectres partiels (G1, G2, R1, R2) et les lumières bleues (LB1, LB2) des sources de lumière laser (LQ1, LQ2) sont choisis de telle sorte que les images partielles stéréoscopiques projetées sont mutuellement orthogonales les unes aux autres
**caractérisé en ce**
**que** l'unité de projection (PE1) présente un corps photoluminescent (PK1) qui est associé à la source de lumière laser bleue (LQ1) et est conçu et disposé de telle sorte que le corps photoluminescent (PK1) est irradié par la source de lumière laser bleue (LQ1) avec de la lumière bleue (LB1), que le corps photoluminescent (PK1) émet de la lumière à large bande (L1) qui contient de la lumière de la couleur fondamentale rouge et verte,
**qu'**il présente un agencement de filtrage (FA1) qui est conçu et disposé de telle sorte que la lumière à large bande (L1) émise est filtrée en au moins un spectre partiel rouge à bande étroite (R1) avec une largeur de demi-valeur inférieure à 25 nm et un spectre partiel vert à bande étroite (G1) avec une largeur de demi-valeur inférieure à 25 nm,
**et qu'**au moins un spectre partiel (G2, R2) est formé par deux sous-spectres à bande étroite (G21, G22 ; R21, R22), faiblement espacés et voisins, que la seconde unité de projection (PE2) présente un second corps photoluminescent (PK2) qui est associé à une seconde source de lumière laser bleue (LQ2) et qui est conçu et disposé de telle sorte que le second corps photoluminescent (PK2) est irradié par la seconde source de lumière laser bleue (LQ2) avec de la lumière bleue (LB2) de telle sorte qu'il émet de la lumière à large bande (L2),
et qui présente un second agencement de filtrage (FA2) qui est conçu et disposé de telle sorte que la lumière à large bande (L2) émise filtre en au moins un second spectre partiel rouge à bande étroite (R2) et un second spectre partiel vert à bande étroite (G2) est filtré.

2. Dispositif pour la projection d'une image stéréoscopique ou d'une image partielle stéréoscopique pour un système stéréoscopique à multiplexage en longueur d'onde selon la revendication 1,
dans lequel deux sous-spectres (G22, R21) voisins de spectres partiels (G2, R2) différents sont reliés entre eux pour former un sous-spectre (G22-R21) commun.

3. Dispositif pour la projection d'une image stéréoscopique ou d'une image partielle stéréoscopique pour un système stéréoscopique à multiplexage en longueur d'onde selon la revendication 2,
dans lequel les zones de transmission orthogonales des spectres partiels à bande étroite et des sous-spectres présentant une longueur d'onde centrale dans la plage de 525 nm (G1), 545 nm (G21), 580 nm (G22-R21), 610 nm (R1), 635 nm (R22) ou dans la plage de 549 nm (G1), 508 nm (G21), 580 nm (G22-R21), 609 nm (R1), au-dessus de 640 nm en particulier de 664 nm (R22).

4. Dispositif pour la projection d'une image stéréoscopique ou d'une image partielle stéréoscopique pour un système stéréoscopique à multiplexage en longueur d'onde selon l'une des revendications 1 à 3,
dans lequel un ou plusieurs agencements de filtres (FA1, FA2) présentent plusieurs filtres optiques comportant chacun une bande passante correspondant à plusieurs spectres partiels (G1, G2, R1, R2) et/ou correspondant aux lumières bleues (LB1, LB2).

5. Dispositif pour la projection d'une image stéréoscopique ou d'une image partielle stéréoscopique pour un système stéréoscopique à multiplexage en longueur d'onde selon l'une des revendications 1 à 4,
dans lequel les deux unités de projection (PE1, PE2) présentant un corps photoluminescent (PK1, PK2) commun,
le corps photoluminescent (PK1, PK2) commun est associé aux deux sources de lumière laser bleue (LQ1, LQ2) et est conçu et disposé de telle sorte que le corps photoluminescent (PK1, PK2) commun est irradié par les deux sources de lumière laser bleue (LQ1, LQ2) avec de la lumière bleue (LB1, LB2) de telle sorte, qu'il émet de la lumière à large bande (L1, L2) et présente des agencements de filtrage (FA1, FA2) qui sont conçus et disposés de telle sorte que la lumière à large bande (L1, L2) émise filtre en au moins deux spectres partiels rouges à bande étroite (R1, R2) et filtre au moins deux spectres partiels verts à bande étroite (G1, G2),
dans lequel les spectres partiels (G1, G2, R1, R2) et les lumières bleues (LB1, LB2) des sources de lumière laser (LQ1, LQ2) sont choisis de telle sorte que les images partielles stéréoscopiques projetées sont mutuellement orthogonales les unes aux autres.

6. Dispositif pour la projection d'une image stéréoscopique ou d'une image partielle stéréoscopique pour un système stéréoscopique à multiplexage en longueur d'onde selon l'une des revendications 1 à 5,
dans lequel les zones de transmission orthogonales des spectres partiels à bande étroite présentent une longueur d'onde centrale dans la plage de 525 nm (G1), 545 nm (G2), 610 nm (R1), 635 nm (R2).

7. Dispositif pour la projection d'une image stéréoscopique ou d'une image partielle stéréoscopique pour un système stéréoscopique à multiplexage en longueur d'onde selon l'une des revendications 1 à 6,
dans lequel les agencements de filtres comprennent des filtres optiques qui sont disposés séquentiellement les uns derrière les autres sur une roue de filtres (FR).

8. Dispositif pour la projection d'une image stéréoscopique ou d'une image partielle stéréoscopique pour un système stéréoscopique à multiplexage en longueur d'onde selon l'une des revendications 5 à 7,
dans lequel un unificateur de faisceau (SV) est disposé entre les deux sources de lumière laser (LQ1, LQ2) et le corps photoluminescent (PK1, PK2) commun.

9. Dispositif pour la projection d'une image stéréoscopique ou d'une image partielle stéréoscopique pour un système stéréoscopique à multiplexage en longueur d'onde selon l'une des revendications 1 à 8,
dans lequel une unité d'imagerie (BG1, BG2) est disposée dans le trajet des rayons après le corps photoluminescent (PK1, PK2) associé, en particulier après l'agencement de filtres (FA1, FA2).

10. Dispositif pour la projection d'une image stéréoscopique ou d'une image partielle stéréoscopique pour un système stéréoscopique à multiplexage en longueur d'onde selon la revendication 7 ou 9,
dans lequel les deux corps photoluminescents (PK1, PK2) sont disposés séquentiellement l'un derrière l'autre sur une roue photoluminescente (PR)
et la roue photoluminescente (PR) est disposée dans le trajet des rayons, en amont des agencements de filtres (FA1, FA2) qui sont associés aux corps photoluminescents (PK1, PK2) de la roue photoluminescente (PR),
et en particulier au moins une unité d'imagerie (BG1, BG2) est disposée après la roue photoluminescente (PR) et/ou les agencements de filtres (FA1, FA2).

11. Dispositif pour la projection d'une image stéréoscopique ou d'une image partielle stéréoscopique pour un système stéréoscopique à multiplexage en longueur d'onde selon la revendication 10,
dans lequel une ou plusieurs zones transparentes (TB) sont disposées sur la roue photoluminescente (PR) entre les plusieurs corps photoluminescents (PK1, PK2).

12. Dispositif pour la projection d'une image stéréoscopique ou d'une image partielle stéréoscopique pour un système stéréoscopique à multiplexage en longueur d'onde selon l'une des revendications 1 à 11,
dans lequel un séparateur de faisceau (ST) est disposé entre le corps photoluminescent (PK1, PK2) et l'agencement de filtre (FA1, FA2) associé.

13. Dispositif pour la projection d'une image stéréoscopique ou d'une image partielle stéréoscopique pour un système stéréoscopique à multiplexage en longueur d'onde selon la revendication 12,
dans lequel le séparateur de faisceau (ST) contient l'agencement de filtres (FA1, FA2).

14. Dispositif pour la projection d'une image stéréoscopique ou d'une image partielle stéréoscopique pour un système stéréoscopique à multiplexage en longueur d'onde selon l'une des revendications 1 à 13,
dans lequel au moins une source de lumière laser (LQ1, LQ2) émet une lumière laser bleue à bande étroite avec une longueur d'onde de 445 nm (LQ1) ou de 465 nm (LQ2).

15. Dispositif pour la projection d'une image stéréoscopique ou d'une image partielle stéréoscopique pour un système stéréoscopique à multiplexage en longueur d'onde selon l'une des revendications 1 à 14,
dans lequel il est prévu au moins une source de lumière laser rouge qui produit une lumière laser rouge à bande étroite qui est couplée dans le trajet des rayons avant l'unité d'imagerie (BG1, BG2).

16. Système stéréoscopique à multiplexage en longueur d'onde comportant au moins un dispositif pour la projection d'une image stéréoscopique ou d'une image partielle stéréoscopique selon l'une des revendications 1 à 15 et comportant au moins des lunettes stéréoscopiques qui sont appropriées pour filtrer une image partielle stéréoscopique avec un filtre de lunettes et pour filtrer l'autre image partielle stéréoscopique avec l'autre filtre de lunettes.
